# EUROPEAN PATENT APPLICATION

(11) **EP 4 835 876 A1**
(43) Date of publication of application: **04.11.2026**
(21) Application number: 24940809.7
(22) Date of filing: 24.07.2024
(51) Int. Cl.: G09G 3/3233, B60K 35/22, G09G 3/00

(54) **DISPLAY DEVICE FOR VEHICLE**

(30) Priority: 10.05.2024 KR 20240061586
(71) Applicant: LG Electronics Inc., Yeongdeungpo-gu Seoul 07336 (KR)
(72) Inventor: CHOI, Joungman, Seoul 06772 (KR); KIM, Dongkuk, Seoul 06772 (KR); KIM, Kyunglack, Seoul 06772 (KR); KIM, Doyoung, Seoul 06772 (KR)
(74) Representative: Vossius & Partner Patentanwälte Rechtsanwälte mbB
(86) International application number: PCT/KR2024/010744
(87) International publication number: WO 2025/234532

(57) **Abstract**

A display apparatus for a vehicle is disclosed. A display apparatus for a vehicle according to an embodiment of the present disclosure includes: a display including an organic light emitting diode panel; and a signal processing device configured to perform signal processing on an input image and output an image signal to the display, wherein the signal processing device is configured to: perform luminance compensation and color compensation for each pixel based on an angle between a pixel of the display and a driver seat, and an average gray level of the input image; and output an image signal on which the luminance compensation and the color compensation are performed. Accordingly, it is possible to compensate for luminance and color distortion according to the angle or distance between the driver seat and the display.

## Description

### BACKGROUND

### 1. Field

The present disclosure relates to a display apparatus for a vehicle, and more particularly, to a display apparatus for a vehicle capable of compensating for luminance and color distortion according to an angle or a distance between a driver's seat and a display.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is positioned on an instrument cluster to present various types of information. In addition to the cluster display, in order to display vehicle driving information and the like, various displays, such as a center information display (CID) and a head-up display that outputs a projection image onto a windshield, are increasingly being mounted in vehicles.

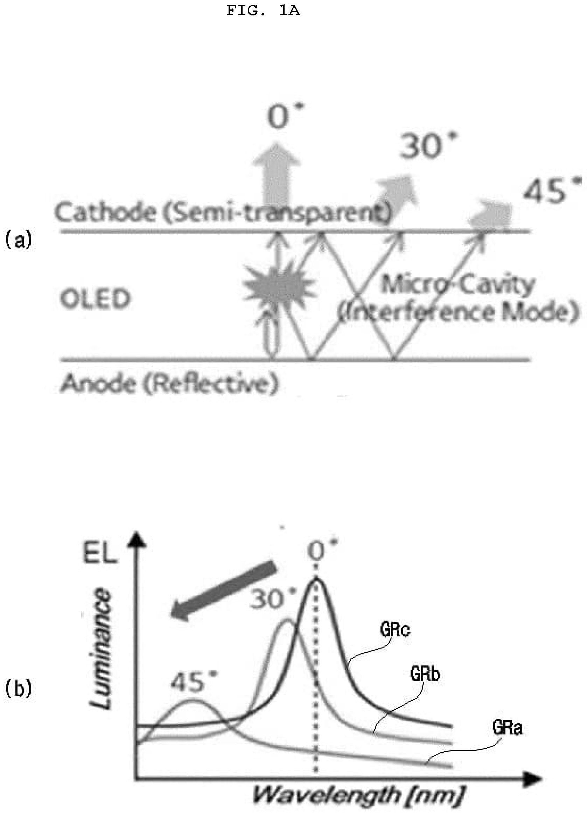

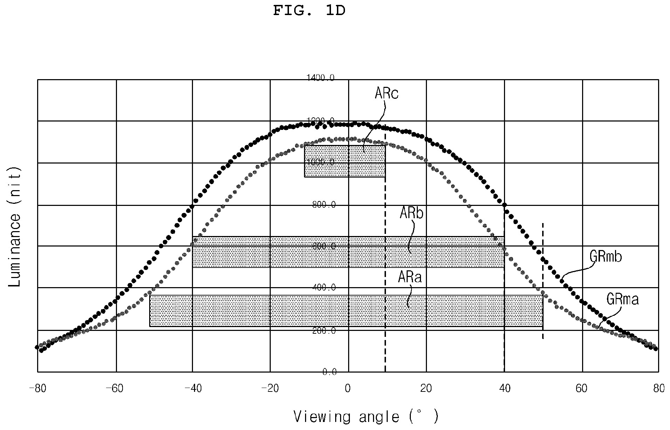

FIGS. 1A to 1D are diagrams referred to in the description of an organic light emitting diode panel related to the present disclosure.

FIG. 1A illustrates angular light output of an organic light emitting diode (OLED) panel 210.

Referring to FIG. 1A, the OLED panel 210 outputs light based on a potential difference between an anode and a cathode.

However, due to a light wavelength shift phenomenon resulting from a microcavity effect caused by a deposition thickness of an organic material in the OLED panel 210, an optical path difference of light occurs between a front (i.e., on-axis) and a side (i.e., off-axis) of the OLED panel 210.

Meanwhile, the microcavity effect refers to a phenomenon in which an emission spectrum changes due to an interference effect of light determined by a reflectance of a reflective electrode, a transmittance of a semi-transparent electrode, and a distance between the two electrodes, namely, a thickness of an organic material layer.

of FIG. 1A illustrates emission of light from the OLED panel 210 at a front position of 0 degrees, a first side position of 30 degrees, and a second side position of 45 degrees.

of FIG. 1A illustrates that the OLED panel 210 outputs light having different wavelengths at the front position of 0 degrees, the first side position of 30 degrees, and the second side position of 45 degrees due to a microcavity effect.

According to (b) of FIG. 1A, light having a longest wavelength can be emitted at the front position of 0 degrees of the OLED panel 210, whereas light having a shortest wavelength can be emitted at the second side position of 45 degrees of the OLED panel 210.

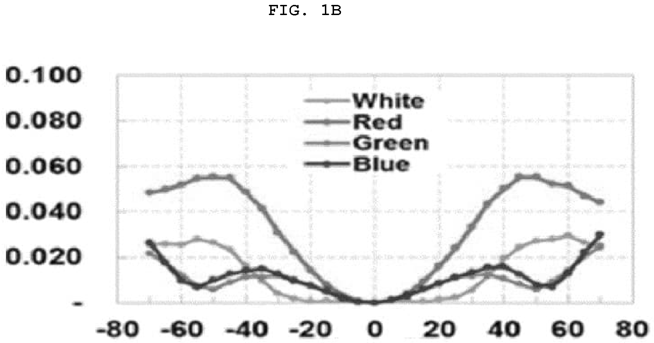

FIG. 1B illustrates a plurality of light losses at a front and a side of the OLED panel 210.

Referring to FIG. 1B, at a front position of 0 degrees of the OLED panel 210, losses in red light, green light, blue light, and white light are smallest. However, as a viewing angle increases, luminance loss and color loss due to a wavelength shift increase.

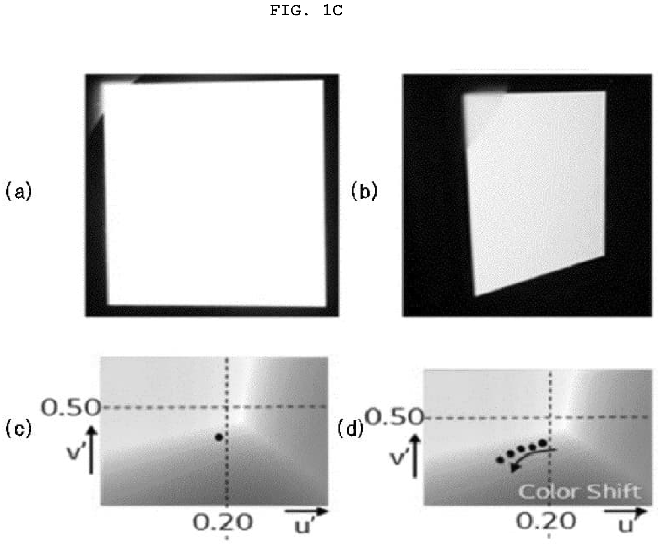

FIG. 1C illustrates luminance and color shift at a front and a side of the OLED panel 210.

Referring to the figure, as shown in (a) of FIG. 1C, a luminance level at a front position of 0 degrees of the OLED panel 210 is greater than a luminance level at a side position of approximately 40 degrees of the OLED panel 210, as shown in (b) of FIG. 1C.

Meanwhile, according to FIGS. 1A to 1D, when an OLED panel is used as a vehicle display, a difference in an optical path of light occurs between the front and the side of the OLED panel due to a pixel microcavity effect. Such a difference in the optical path of light results in a wavelength shift of the light, thereby causing luminance distortion and color distortion.

### SUMMARY

It is an object of the present disclosure to provide a display apparatus for a vehicle capable of compensating for luminance and color distortion according to an angle or a distance between a driver's (or driver) seat and a display.

It is another object of the present disclosure to provide a display apparatus for a vehicle capable of performing image quality processing based on a viewing angle.

It is yet another object of the present disclosure to provide a display apparatus for a vehicle capable of compensating for luminance and color distortion based more on a change in a display height.

In accordance with an aspect of the present disclosure, the above and other objects can be accomplished by providing a display apparatus for a vehicle including: a display including an organic light emitting diode panel; and a signal processing device configured to perform signal processing on an input image and output an image signal to the display, wherein the signal processing device is configured to: perform luminance compensation and color compensation for each pixel based on an angle between a pixel of the display and a driver seat, and an average gray level of the input image; and output an image signal on which the luminance compensation and the color compensation are performed.

The signal processing device can be configured to: perform first luminance compensation and color compensation for each pixel based on the angle between a pixel of the display and the driver seat; and perform second luminance compensation for each pixel based on the average gray level of the input image.

The signal processing device can be configured to: perform first luminance compensation and color compensation for each pixel based on a pixel of the display, a shape of the display, and an angle of the display with the driver seat; and perform second luminance compensation for each pixel based on the average gray level of the input image.

The signal processing device can be configured to: calculate an average gray level of the input image based on gray levels of the input image; select, based on the average gray level, one compensation curve from among a plurality of compensation curves; and perform the luminance compensation and the color compensation for each pixel based on the angle between a pixel of the display and the driver seat, and the selected compensation curve.

The signal processing device can be configured to: change a first luminance level of the input image corresponding to a first pixel of the display to a second luminance level; change a third luminance level of the input image corresponding to a second pixel of the display to a fourth luminance level, the second pixel being closer to the driver seat than the first pixel; and control a difference between the fourth luminance level and the third luminance level to be greater than a difference between the second luminance level and the first luminance level.

The signal processing device can be configured to control a luminance variation of a luminance level of the input image corresponding to a first pixel of the display to be less than a luminance variation of a luminance level of the input image corresponding to a second pixel of the display, the second pixel being closer to the driver seat than the first pixel.

The signal processing device can be configured to control a color variation of the input image corresponding to a first pixel of the display to be less than a color variation of the input image corresponding to a second pixel of the display, the second pixel being closer to the driver seat than the first pixel.

The signal processing device can be configured to control a variation of a blue luminance level of the input image corresponding to a predetermined pixel of the display to be less than a variation of a green luminance level or a variation of a red luminance level.

The signal processing device can be configured to control a variation of luminance compensation or a variation of color compensation for each pixel to remain constant even when the average gray level of the input image changes.

The signal processing device can be configured to control a variation of luminance compensation or a variation of color compensation for each pixel to remain constant even when the average gray level of the input image increases.

The signal processing device can be configured to control a variation of luminance compensation or a variation of color compensation for each pixel to remain constant without increasing or decreasing even when the average gray level of the input image decreases.

The signal processing device can be configured to perform luminance compensation and color compensation for each pixel. In response to the input image being a white image, the signal processing device can be configured to control a luminance level of a first pixel of the display to be greater than a luminance level of a second pixel of the display, the second pixel being closer to the driver seat than the first pixel.

The signal processing device can be configured to perform luminance compensation and color compensation for each pixel based on a target pixel among a plurality of pixels of the display.

The signal processing device can be configured to not perform the luminance compensation and the color compensation on the target pixel.

The signal processing device can be configured to change a target pixel from a first pixel to a second pixel upon a change in a size or a shape of the display, and to perform luminance compensation and color compensation for each pixel based on the changed second pixel.

The signal processing device can be configured to: change a target pixel from a first pixel to a second pixel in response to a change in a height of a driver seat and an eye height of a driver seated in the driver seat; and perform luminance compensation and color compensation for each pixel based on the changed second pixel.

The signal processing device can be configured to: change a target pixel from a first pixel to a second pixel in response to a driver being seated in a driver seat and a passenger is seated in a passenger seat; and perform luminance compensation and color compensation for each pixel based on the changed second pixel.

The signal processing device can be configured to: perform luminance compensation and color compensation for each pixel based on an angle between a pixel of the display and a driver seat, an angle between a pixel of the display and a passenger seat, and an average gray level of the input image; and output an image signal on which the luminance compensation and the color compensation are performed.

The display apparatus can further include a motor driver configured to cause a height adjustment of the display. The signal processing device can be configured to perform luminance compensation and color compensation for each pixel based on a height of the display, an angle between a pixel of the display and a driver seat, and an average gray level of the input image; and output an image signal on which the luminance compensation and the color compensation are performed.

The signal processing device can be configured to: change a target pixel in response to a change in the height of the display; and perform luminance compensation and color compensation for each pixel based on the changed target pixel.

The signal processing device can be configured to change a luminance variation or a color variation of a first pixel of the display in response to a change in the height of the display.

The signal processing device can be configured to control a variation of a luminance level of the input image corresponding to a first pixel of the display in response to the height of the display being a first height to be less than a variation of a luminance level of the input image corresponding to the first pixel of the display in response to the height of the display being a second height lower than the first height.

The signal processing device can be configured to control a color variation of the input image corresponding to a first pixel of the display in response to the height of the display being a first height to be less than a color variation of the input image corresponding to the first pixel of the display in response to the height of the display being a second height lower than the first height.

### EFFECTS OF THE DISCLOSURE

A display apparatus for a vehicle according to an embodiment of the present disclosure includes: a display including an organic light emitting diode panel; and a signal processing device configured to perform signal processing on an input image and output an image signal to the display, wherein the signal processing device is configured to: perform luminance compensation and color compensation for each pixel based on an angle between a pixel of the display and a driver seat, and an average gray level of the input image; and output an image signal on which the luminance compensation and the color compensation are performed. Accordingly, it is possible to compensate for luminance and color distortion according to the angle or distance between the driver seat and the display. Further, it is possible to perform image quality processing based on a viewing angle.

The signal processing device can be configured to: perform first luminance compensation and color compensation for each pixel based on the angle between a pixel of the display and the driver seat; and perform second luminance compensation for each pixel based on the average gray level of the input image. Accordingly, it is possible to compensate for luminance and color distortion according to the angle or distance between the driver seat and the display.

The signal processing device can be configured to: perform first luminance compensation and color compensation for each pixel based on a pixel of the display, a shape of the display, and an angle of the display with the driver seat; and perform second luminance compensation for each pixel based on the average gray level of the input image. Accordingly, it is possible to compensate for luminance and color distortion according to the angle or a distance between the driver seat and the display.

The signal processing device can be configured to: calculate an average gray level of the input image based on gray levels of the input image; select, based on the average gray level, one compensation curve from among a plurality of compensation curves; and perform the luminance compensation and the color compensation for each pixel based on the angle between a pixel of the display and the driver seat, and the selected compensation curve. Accordingly, it is possible to compensate for luminance and color distortion according to the angle or distance between the driver seat and the display.

The signal processing device can be configured to: change a first luminance level of the input image corresponding to a first pixel of the display to a second luminance level; change a third luminance level of the input image corresponding to a second pixel of the display to a fourth luminance level, the second pixel being closer to the driver seat than the first pixel; and control a difference between the fourth luminance level and the third luminance level to be greater than the second luminance level and the first luminance level. Accordingly, it is possible to compensate for luminance and color distortion according to the angle or distance between the driver seat and the display.

The signal processing device can be configured to control a luminance variation of a luminance level of the input image corresponding to a first pixel of the display to be less than a luminance variation of a luminance level of the input image corresponding to a second pixel of the display, the second pixel being closer to the driver seat than the first pixel. Accordingly, it is possible to compensate for luminance and color distortion according to the angle or a distance between the driver seat and the display.

The signal processing device can be configured to control a color variation of the input image corresponding to a first pixel of the display to be less than a color variation of the input image corresponding to a second pixel of the display, the second pixel being closer to the driver seat than the first pixel. Accordingly, it is possible to compensate for luminance and color distortion according to the angle or distance between the driver seat and the display.

The signal processing device can be configured to control a variation of a blue luminance level of the input image corresponding to a predetermined pixel of the display to be less than a variation of a green luminance level or a variation of a red luminance level. Accordingly, it is possible to compensate for luminance and color distortion according to the angle or distance between the driver seat and the display.

The signal processing device can be configured to a variation of luminance compensation or a variation of color compensation for each pixel to remain constant even when the average gray level of the input image changes. Accordingly, it is possible to compensate for luminance and color distortion according to the angle or distance between the driver seat and the display. In particular, it is possible to prevent an increase in power consumption while maintaining luminance of the image.

The signal processing device can be configured to control a variation of luminance compensation or a variation of color compensation for each pixel to remain constant even when the average gray level of the input image increases. Accordingly, it is possible to compensate for luminance and color distortion according to the angle or distance between the driver seat and the display. In particular, it is possible to prevent an increase in power consumption while maintaining luminance of the image.

The signal processing device can be configured to control a variation of luminance compensation or a variation of color compensation for each pixel to remain constant without increasing or decreasing even when the average gray level of the input image decreases. Accordingly, it is possible to compensate for luminance and color distortion according to the angle or distance between the driver seat and the display. In particular, it is possible to prevent an increase in power consumption while maintaining luminance of the image.

The signal processing device can be configured to perform luminance compensation and color compensation for each pixel. In response to the input image being a white image, the signal processing device can be configured to control a luminance level of a first pixel of the display to be greater than a luminance level of a second pixel of the display, the second pixel being closer to the driver seat than the first pixel. Accordingly, it is possible to compensate for luminance and color distortion according to the angle or distance between the driver seat and the display.

The signal processing device can be configured to perform luminance compensation and color compensation for each pixel based on a target pixel among a plurality of pixels of the display. Accordingly, it is possible to compensate for luminance and color distortion according to the angle or distance between the driver seat and the display.

The signal processing device can be configured to not perform the luminance compensation and the color compensation on the target pixel. Accordingly, it is possible to perform luminance compensation and color compensation in an efficient manner.

The signal processing device can be configured to change a target pixel from a first pixel to a second pixel upon a change in a size or a shape of the display, and to perform luminance compensation and color compensation for each pixel based on the changed second pixel. Accordingly, it is possible to compensate for luminance and color distortion according to the angle or distance between the driver seat and the display.

The signal processing device can be configured to: change a target pixel from a first pixel to a second pixel in response to a change in a height of a driver seat and an eye height of a driver seated in the driver seat; and perform luminance compensation and color compensation for each pixel based on the changed second pixel. Accordingly, it is possible to perform luminance compensation and color compensation according to the variable angle or distance between the driver seat and the display.

The signal processing device can be configured to: change a target pixel from a first pixel to a second pixel in response to a driver being seated in a driver seat and a passenger is seated in a passenger seat; and perform luminance compensation and color compensation for each pixel based on the changed second pixel. Accordingly, it is possible to compensate for luminance and color distortion according to the angle or distance between the driver seat and the display.

The signal processing device can be configured to: perform luminance compensation and color compensation for each pixel based on an angle between a pixel of the display and a driver seat, an angle between a pixel of the display and a passenger seat, and an average gray level of the input image; and output an image signal on which the luminance compensation and the color compensation are performed. Accordingly, it is possible to compensate for luminance and color distortion according to the angle or distance between the driver seat and the display.

The display apparatus can further include a motor driver configured to cause a height adjustment of the display. The signal processing device can be configured to perform luminance compensation and color compensation for each pixel based on a height of the display, an angle between a pixel of the display and a driver seat, and an average gray level of the input image; and output an image signal on which the luminance compensation and the color compensation are performed. Accordingly, it is possible to compensate for luminance and color according to the angle or distance between the driver seat and the display corresponding to a change in the height of the display.

The signal processing device can be configured to: change a target pixel in response to a change in the height of the display; and perform luminance compensation and color compensation for each pixel based on the changed target pixel. Accordingly, it is possible to compensate for luminance and color distortion based more on a change in the height of the display.

The signal processing device can be configured to change a luminance variation or a color variation of a first pixel of the display in response to a change in the height of the display. Accordingly, it is possible to compensate for luminance and color distortion based more on a change in the height of the display.

The signal processing device can be configured to control a variation of a luminance level of the input image corresponding to a first pixel of the display in response to the height of the display being a first height to be less than a variation of a luminance level of the input image corresponding to the first pixel of the display in response to the height of the display being a second height lower than the first height. Accordingly, it is possible to compensate for luminance and color distortion based more on a change in the height of the display.

The signal processing device can be configured to control a color variation of the input image corresponding to a first pixel of the display in response to the height of the display being a first height to be less than a color variation of the input image corresponding to the first pixel of the display in response to the height of the display being a second height lower than the first height. Accordingly, it is possible to compensate for luminance and color distortion based more on a change in the height of the display.

### BRIEF DESCRIPTION OF THE DRAWINGS

FIGS. 1A to 1D are diagrams referred to in the description of an organic light emitting diode panel related to the present disclosure.
FIG. 2 illustrates an example of the exterior and interior of a vehicle.
FIG. 3 illustrates an outer appearance of a display apparatus for a vehicle according to an embodiment of the present disclosure.
FIG. 4 illustrates an example of an internal block diagram of the display apparatus for a vehicle of FIG. 3.
FIG. 5 is an internal block diagram of a first display or a second display of FIG. 3.
FIGS. 6A to 6D are diagrams referred to in the description of an organic light emitting diode panel of FIG. 5.
FIG. 7 illustrates an example of a display apparatus for a vehicle according to an embodiment of the present disclosure.
FIG. 8 is a flowchart illustrating a method of operating a display apparatus for a vehicle according to an embodiment of the present disclosure.
FIGS. 9A to 11C are diagrams referred to in the description of FIG. 8.
FIG. 12 illustrates another example of a display apparatus for a vehicle according to an embodiment of the present disclosure.
FIG. 13 illustrates an example of an internal block diagram of the display apparatus for a vehicle of FIG. 12.
FIGS. 14A to 14B are diagrams referred to in the description of FIG. 12 or FIG. 13.
FIG. 15 illustrates another example of a display apparatus for a vehicle according to an embodiment of the present disclosure.
FIGS. 16A to 16D are diagrams referred to in the description of FIG. 15.
FIGS. 17A to 20B illustrate various examples of a display apparatus for a vehicle according to embodiments of the present disclosure.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

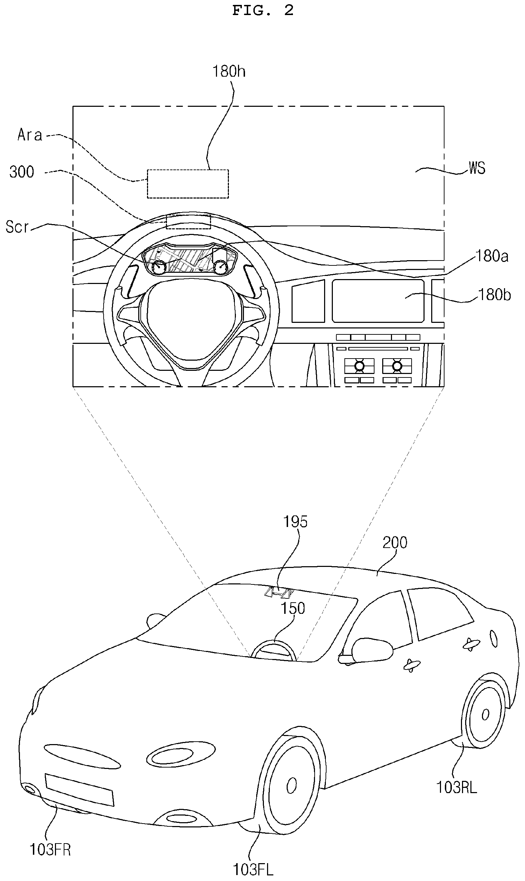

FIG. 2 illustrates an example of the exterior and interior of a vehicle.

Referring to FIG. 2, a vehicle 200 can include a plurality of wheels 103FR, 103FL, 103RL,... rotated by a power source and a steering wheel 150 for adjusting a traveling direction of the vehicle 200.

The vehicle 200 can further include a camera 195 for acquiring an image of the front of the vehicle.

The vehicle 200 can be provided therein with a plurality of displays 180a, 180b, and 180h for displaying images, information, and the like.

For example, among the plurality of displays 180a, 180b, and 180h, a first display 180a can be a cluster display, a second display 180b can be a center information display (CID), and a third display 180h can be a head-up display (HUD) that projects an image onto a predetermined area Ara of a windshield WS.

Meanwhile, the vehicle 200 described herein can be a concept including all of an internal combustion engine vehicle having an engine as a power source, a hybrid vehicle having an engine and an electric motor as power sources, and an electric vehicle having an electric motor as a power source.

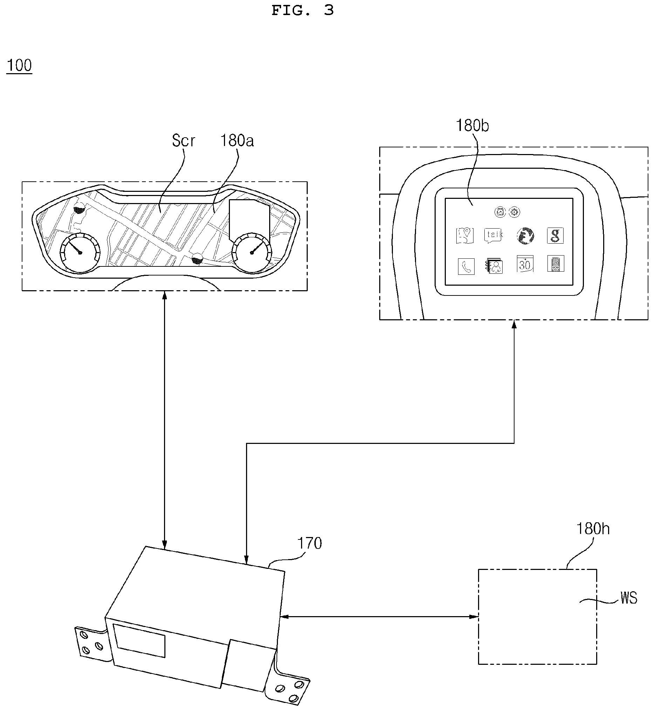

FIG. 3 illustrates an outer appearance of a display apparatus for a vehicle according to an embodiment of the present disclosure.

A display apparatus 100 for a vehicle (or simply "vehicle display apparatus") according to an embodiment of the present disclosure can include a signal processing device 170 configured to perform signal processing to display an image, information, and the like on at least one of the plurality of displays 180a, 180b, and 180h.

As for the plurality of displays 180a, 180b, and 180h, the first display 180a can be a cluster display 180a for displaying a driving state and operation information, the second display 180b can be a center information display (CID) for displaying vehicle operation information, a navigation map, various types of entertainment information, or an image, and the third display 180h can be a HUD display 180h for displaying vehicle driving information.

The signal processing device 170 can be provided therein with a memory 508 and a processor 175 to control at least one of the plurality of displays 180a, 180b, and 180h.

Meanwhile, the signal processing device 170 can execute first to third virtual machines (not shown) on a hypervisor 505 in the processor 175.

The first virtual machine (not shown), which is a server virtual machine, can control the second virtual machine (not shown) and the third virtual machine (not shown), which are guest virtual machines.

Meanwhile, the second virtual machine can be referred to as a first guest virtual machine, and the third virtual machine can be referred to as a second guest virtual machine.

The first guest virtual machine (not shown) can be operated for the first display 180a, and the second guest virtual machine (not shown) can be operated for the second display 180b or the third display 180h.

Meanwhile, the server virtualization machine (not shown) in the processor 175 can be configured to set the memory 508 based on the hypervisor 505 for transmission of the same data to the first guest virtualization machine (not shown) and the second guest virtualization machine (not shown). Accordingly, the first display 180a and the second display 180b in the vehicle can display the same information or the same image in a synchronized manner.

Meanwhile, the server virtualization machine (not shown) in the processor 175 can receive and process wheel speed sensor data of the vehicle, and can transmit the processed wheel speed sensor data to at least one of the first guest virtualization machine (not shown) and the second guest virtualization machine (not shown). Accordingly, at least one virtual machine can share the wheel speed sensor data of the vehicle.

Thus, by using the single signal processing device 170, it is possible to control the plurality of displays 180a, 180b, and 180h.

Meanwhile, some of the plurality of displays 180a, 180b, and 180h can operate under a Linux-based operating system (OS), and others can operate under a Web-based operating system (OS).

According to an embodiment of the present disclosure, the signal processing device 170 can control the plurality of displays 180a, 180b, and 180h operating under different operating systems (OS) to display the same information or the same image in a synchronized manner.

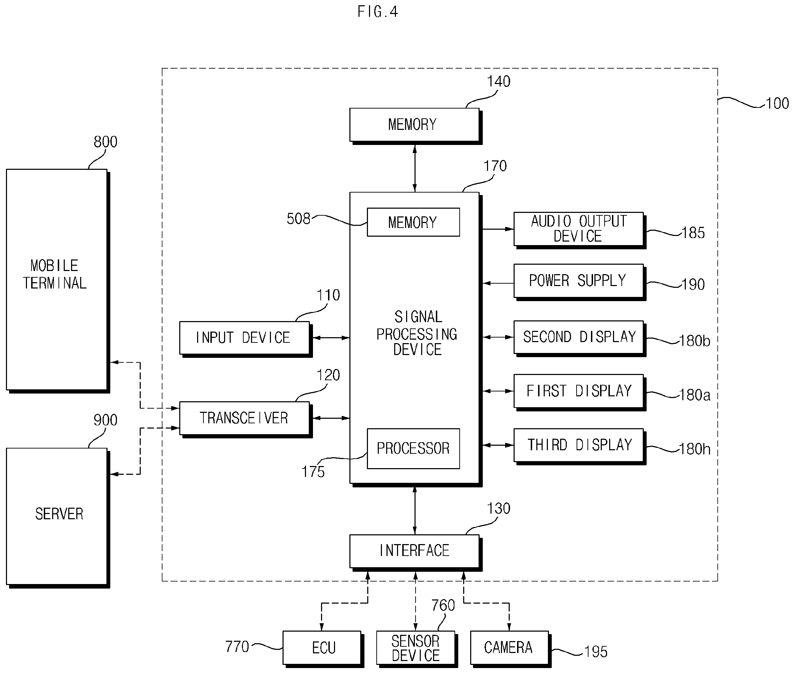

FIG. 4 illustrates an example of an internal block diagram of a display apparatus for a vehicle according to an embodiment of the present disclosure.

Referring to FIG. 4, the vehicle display apparatus 100 according to an embodiment of the present disclosure can include an input device 110, a transceiver 120, an interface 130, a memory 140, a signal processing device 170, a plurality of displays 180a, 180b, and 180h, an audio output device 185, and a power supply 190.

The input device 110 can include a physical button, a pad, and the like for button input, touch input, and the like.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The transceiver 120 can receive weather information and road traffic condition information, e.g., transport protocol expert group (TPEG) information, from the mobile terminal 800 or the server (not shown). To this end, the transceiver 120 can include a mobile communication module (not shown).

The interface 130 can receive sensor information from an electronic control unit (ECU) 770 or a sensor device 760, and can transmit the received information to the signal processing device 170.

Here, the sensor information can include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module can include a GPS module for receiving GPS information.

Meanwhile, the interface 130 can receive front-of-vehicle image data, side-of-vehicle image data, rear-of-vehicle image data, and obstacle-around-vehicle distance information from a camera 195, a LiDAR (not shown), or the like, and can transmit the received information to the signal processing device 170.

The memory 140 can store various data necessary for the overall operation of the vehicle display apparatus 100, such as programs for processing or control of the signal processing device 170.

For example, the memory 140 can store data regarding a hypervisor, a server virtual machine (not shown), and a plurality of guest virtual machines to execute within the processor 175.

The audio output device 185 can convert an electrical signal from the signal processing device 170 into an audio signal and output the audio signal. To this end, the audio output device 185 can include a speaker and the like.

Under the control of the signal processing device 170, the power supply 190 can supply power required for the operation of each component. In particular, the power supply 190 can receive power from a battery in the vehicle.

The third display 180h, which is a HUD display, can include a picture generation device 300 (see FIG. 2) to project an image, and can output an augmented reality-based object under the control of the signal processing device 170.

For example, the HUD display 180h can output vehicle speed information, vehicle traveling direction information, a forward-vehicle object, a distance indicator showing a distance to a vehicle ahead, and the like.

In another example, the HUD display 180h can output an augmented reality lane carpet, an augmented reality route carpet, or an augmented reality dynamic carpet corresponding to a road image.

The signal processing device 170 can control the plurality of displays 180a, 180b, and 180h.

The signal processing device 170 can control the overall operation of each unit or device in the vehicle display apparatus 100.

For example, the signal processing device 170 can include a memory 508 and a processor 175 configured to perform signal processing for the vehicle displays 180a and 180b.

The processor 175 can execute the hypervisor (not shown), and can execute the server virtual machine (not shown) and the plurality of guest virtual machines (not shown) on the executed hypervisor.

Here, the first guest virtual machine (not shown) can be operated for the first display 180a, and the second guest virtual machine (not shown) can be operated for the second display 180b or the third display 180h.

Meanwhile, the signal processing device 170 can process various signals, such as an audio signal, a video (or image) signal, and a data signal. To this end, the signal processing device 170 can be implemented in the form of a system on chip (SOC).

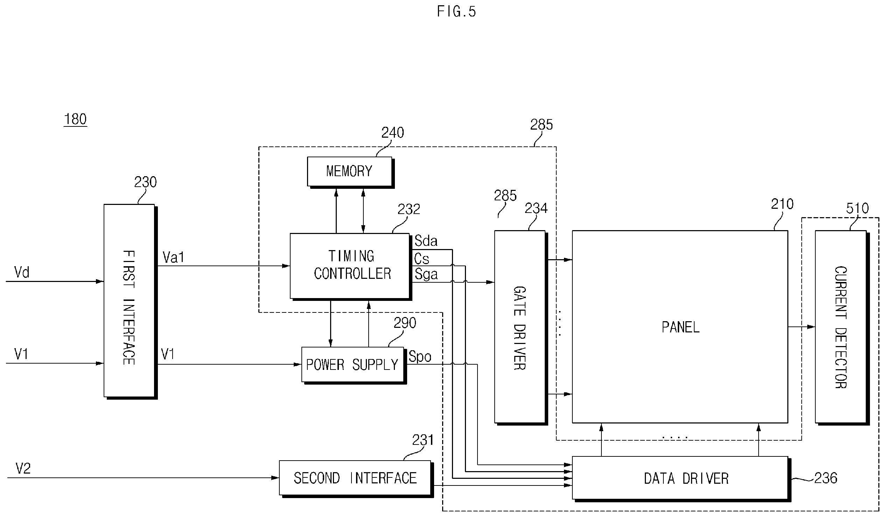

FIG. 5 is an internal block diagram of a first display or a second display of FIG. 3.

Referring to FIG. 5, the first display 180a or the second display 180b based on an organic light emitting diode panel can include an organic light emitting diode (OLED) panel 210, a first interface 230, a second interface 231, a timing controller 232, a gate driver 234, a data driver 236, a memory 240, a power supply 290, a current detector 510, and the like.

In the following description, the first display 180a or the second display 180b is referred to as a display 180.

The display 180 can receive a video signal Vd, a first DC power V1, and a second DC power V2, and can display a predetermined image based on the video signal Vd.

Meanwhile, the first interface 230 in the display 180 can receive the video signal Vd and the first DC power V1 from the signal processing device 170.

Here, the first DC power V1 can be used for the operation of the power supply 290 and the timing controller 232 in the display 180.

The second interface 231 can receive the second DC power V2 from an external power supply 190. Meanwhile, the second DC power V2 can be input to the data driver 236 in the display 180.

The timing controller 232 can output a data driving signal Sda and a gate driving signal Sga, based on the video signal Vd.

For example, when the first interface 230 converts the input video signal Vd and outputs a converted video signal va1, the timing controller 232 can output the data driving signal Sda and the gate driving signal Sga based on the converted video signal va1.

In addition to the video signal Vd from the signal processing device 170, the timing controller 232 can further receive a control signal, a vertical synchronization signal Vsync, and the like.

In addition to the video signal Vd, based on the control signal, the vertical synchronization signal Vsync, and the like, the timing controller 232 can output a gate driving signal Sga for the operation of the gate driver 234 and a data driving signal Sda for the operation of the data driver 236.

In this case, when the OLED panel 210 includes RGB subpixels, the data driving signal Sda can be a data driving signal for driving the RGB subpixels.

When the OLED panel 210 includes RGBW subpixels, the data driving signal Sda can be a data driving signal for driving the RGBW subpixels.

Meanwhile, the timing controller 232 can further output a control signal Cs to the gate driver 234.

The gate driver 234 and the data driver 236 supply a scan signal and a data signal to the OLED panel 210 through a gate line GL and a data line DL, respectively, according to the gate driving signal Sga and the data driving signal Sda from the timing controller 232. This allows the OLED panel 210 to display a predetermined image.

Meanwhile, the OLED panel 210 can include an organic light emitting layer. In order to display an image, a plurality of gate lines GL and data lines DL can be disposed in a matrix form in each pixel corresponding to the organic light emitting layer.

Meanwhile, as a scan signal is input to the gate line GL, the gate line GL can also be referred to as a scan line.

Meanwhile, the data driver 236 can output a data signal to the OLED panel 210 based on the second DC power V2 from the second interface 231.

The power supply 290 can supply various types of power to the gate driver 234, the data driver 236, the timing controller 232, and the like.

The current detector 510 can detect a current flowing through subpixels of the OLED panel 210. The detected current can be input to the processor 270 or the like, for a cumulative (or accumulated) current calculation.

Meanwhile, the timing controller 232, the gate driver 234, the data driver 236, and the memory 240 in the figure can be configured as a single integrated circuit (IC).

Therefore, the timing controller 232, the gate driver 234, the data driver 236, and the memory 240 can be collectively referred to as a driving controller 285.

Meanwhile, the driving controller 285 can include a buffer (not shown) to store frame data.

In particular, the timing controller 232 in the driving controller 285 can output a gate driving signal and a data driving signal based on the frame data stored in the buffer (not shown) or the memory 240.

The timing controller 232 or the driving controller 285 can perform various types of control in the display 180. For example, the driving controller 285 can control the gate driver 234, the data driver 236, the timing controller 232, and the like.

Meanwhile, the timing controller 232 or the driving controller 285 can receive current information flowing through subpixels of the OLED panel 210 from the current detector 510.

Then, based on the current information flowing through the subpixels of the OLED panel 210, the timing controller 232 or the driving controller 285 can calculate an accumulated current of each subpixel of the OLED panel 210. The calculated accumulated current can be stored in the memory 240.

Meanwhile, the timing controller 232 or the driving controller 285 can determine burn-in when the accumulated current of each subpixel of the OLED panel 210 is equal to or greater than an allowable value.

For example, when the accumulated current of each subpixel of the OLED panel 210 is equal to or greater than 300000 A, the timing controller 232 or the driving controller 285 can determine that a corresponding subpixel is a burn-in subpixel.

Meanwhile, when the accumulated current of a subpixel, among the subpixels of the OLED panel 210, is close to an allowable value, the timing controller 232 or the driving controller 285 can determine the corresponding subpixel as a burn-in predicted subpixel.

Meanwhile, based on the current detected by the current detector 510, the timing controller 232 or the driving controller 285 can determine a subpixel having the greatest accumulated current as a burn-in predicted subpixel.

Meanwhile, irrespective of the operation of the current detector 510, the timing controller 232 or the driving controller 285 can predict current information to flow through subpixels based on the video signal from the signal processing device 170, and can determine a burn-in predicted subpixel based on the predicted current information.

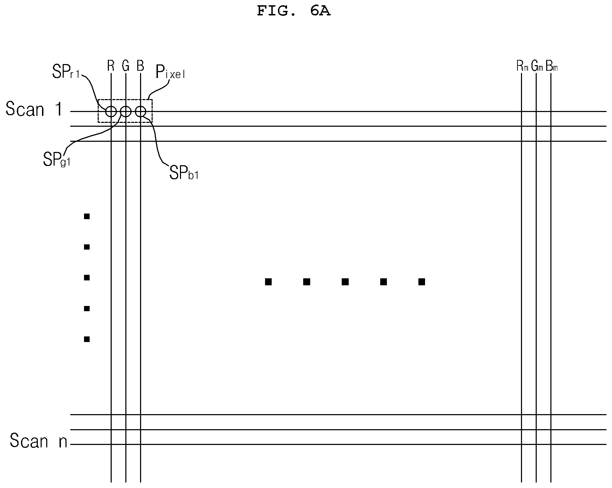

FIGS. 6A to 6D are diagrams referred to in the description of the OLED panel of FIG. 5.

FIG. 6A illustrates an example of a pixel in the OLED panel 210.

Referring to FIG. 6A, the OLED panel 210 can include a plurality of scan lines Scan 1 to Scan n and a plurality of data lines R1, G1, B1 to Rm, Gm, Bm intersecting the scan lines.

Meanwhile, a pixel (subpixel) is defined in an intersection area of the scan line and the data line in the OLED panel 210. In the figure, a pixel including RGB subpixels SR1, SG1, and SB1 is illustrated.

Meanwhile, the RGB subpixels SR1, SG1, and SB1 are respectively provided with a red organic light emitting diode, a green organic light emitting diode, and a blue organic light emitting diode.

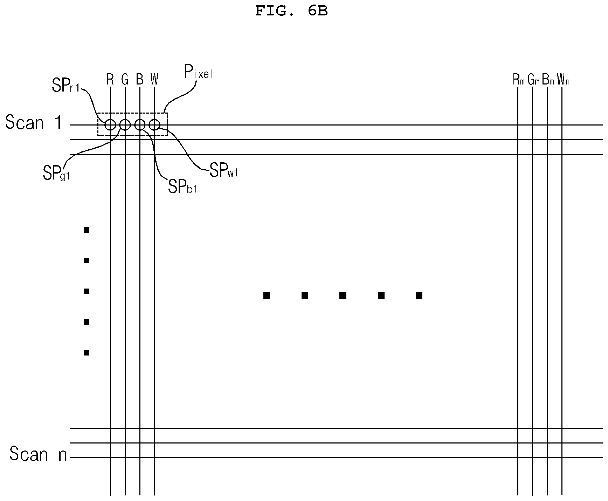

FIG. 6B illustrates another example of a pixel in the panel 210.

Referring to FIG. 6B, the panel 210 can include a plurality of scan lines Scan 1 to Scan n and a plurality of data lines R1, G1, B1, W1 to Rm, Gm, Bm, Wm intersecting the scan lines.

Meanwhile, a pixel (subpixel) is defined in an intersection area of the scan line and data line in the panel 210. In the figure, a pixel including RGBW subpixels SR1, SG1, SB1, and SW1 is illustrated.

The RGBW subpixels SR1, SG1, SB1, and SW1 are respectively provided with a red organic light emitting diode, a green organic light emitting diode, a blue organic light emitting diode, and a white organic light emitting diode.

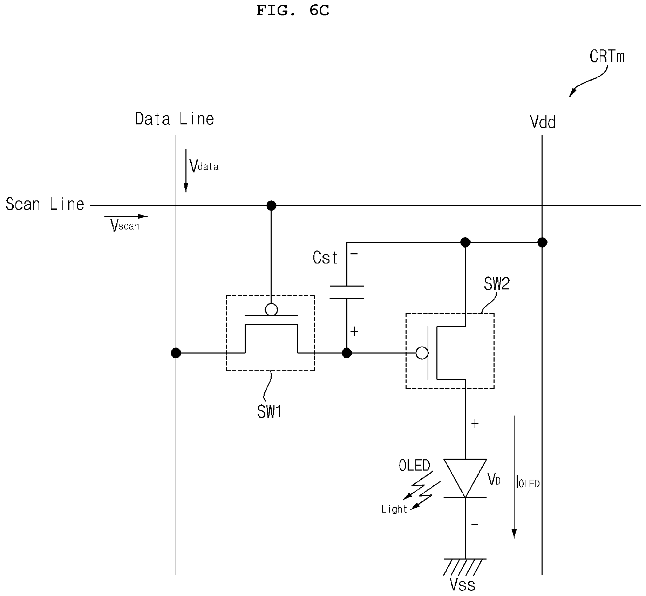

FIG. 6C illustrates an example of a circuit of a subpixel in the pixel of the panel of FIG. 6A or FIG. 6B.

Referring to FIG. 6C, a subpixel circuit CRTm, which is an active type, can include a scan switching element SW1, a storage capacitor Cst, a driving switching element SW2, and an organic light emitting layer OLED.

The scan switching element SW1 is connected at its gate terminal to a scan line and is turned on according to a scan signal Vdscan input thereto. When turned on, the scan switching element SW1 transfers the input data signal Vdata to the gate terminal of the driving switching element SW2 or one end of the storage capacitor Cst.

The storage capacitor Cst is provided between the gate terminal and the source terminal of the driving switching element SW2, and stores a predetermined difference between a data signal level transmitted to one end of the storage capacitor Cst and a DC voltage (VDD) level transmitted to the other end of the storage capacitor Cst.

For example, when the data signal has different levels according to a pulse amplitude modulation (PAM) scheme, the power level stored in the storage capacitor Cst varies according to the level difference of the data signal Vdata.

In another example, when the data signal has different pulse widths according to a pulse width modulation (PWM) scheme, the power level stored in the storage capacitor Cst varies according to the pulse width difference of the data signal Vdata.

The driving switching element SW2 is turned on according to the power level store in the storage capacitor Cst. When the driving switching element SW2 is turned on, a driving current IOLED proportional to the stored power level flows to the organic light emitting layer OLED. Accordingly, the organic light emitting layer OLED performs a light emitting operation.

The organic light emitting layer OLED includes a light emitting layer (EML) corresponding to a subpixel, and can include at least one of a hole injection layer (HIL), a hole transport layer (HTL), an electron transport layer (ETL), and an electron injection layer (EIL). In addition, the organic light emitting layer OLED can include a hole blocking layer and the like.

In the figure, although p-type MOSFETs are illustrated as the scan switching element SW1 and the driving switching element SW2, n-type MOSFETs or other switching elements such as JFET, IGBT, or SIC can also be used.

Meanwhile, the pixel is a hold-type element that continuously emits light in the organic light emitting layer OLED during a unit display period, specifically during a unit frame, after a scan signal is applied.

Meanwhile, the subpixel circuit CRTm in the figure is driven by an active-matrix scheme.

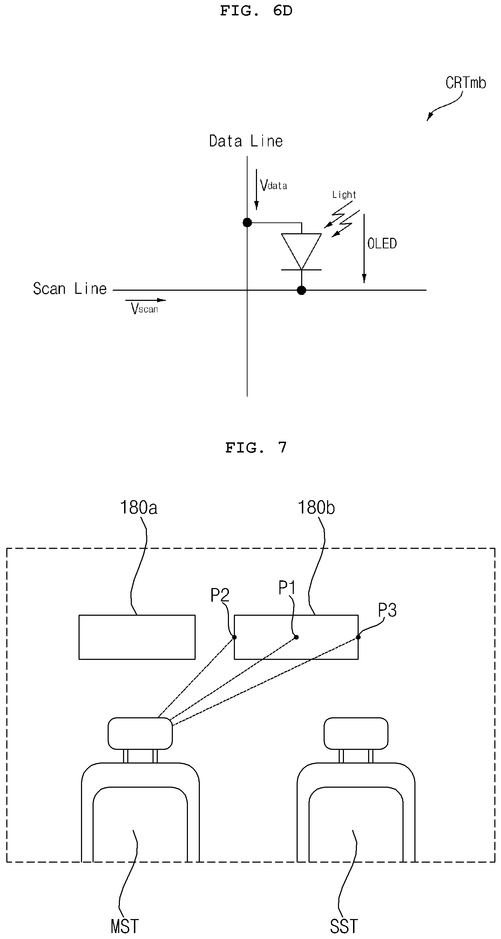

FIG. 6D illustrates another example of a circuit of a subpixel in the pixel of the panel of FIG. 6A or FIG. 6B.

Referring to FIG. 6D, an organic light emitting subpixel circuit CRTm, which is a passive type, can include only an organic light emitting diode LED without any separate switching element.

As illustrated in FIG. 6D, an anode of the organic light emitting diode LED can be connected to a data line so that a data signal Vdata is applied thereto, and a cathode of the organic light emitting diode LED can be connected to a scan line so that a scan signal Vscan is applied thereto.

The organic light emitting diode can emit light or remain non-emissive based on a plurality of subframes according to a passive-matrix scheme.

Meanwhile, unlike FIG. 6D, the anode of the organic light emitting diode LED can be connected to the scan line so that a scan signal Vscan is applied thereto, and the cathode of the organic light emitting diode LED can be connected to the data line so that a data signal Vdata is applied thereto.

Meanwhile, the subpixel circuit CRTm in the figure is driven by a passive-matrix scheme.

FIG. 7 illustrates an example of a display apparatus for a vehicle according to an embodiment of the present disclosure.

Referring to FIG. 7, the vehicle display apparatus 100 according to an embodiment of the present disclosure can include a first display 180a positioned near a driver seat MST and a second display 180b positioned between the driver seat MST and a passenger seat SST.

Meanwhile, when the second display 180b includes the OLED panel 210, a difference in an optical path of light occurs between a front and a side of the second display 180b due to a pixel microcavity effect.

That is, different light is emitted from a first pixel P1, a second pixel P2, and a third pixel P3 of the second display 180b.

Due to such a difference in the optical path of light, a wavelength of the light is changed, and consequently, image quality distortion occurs.

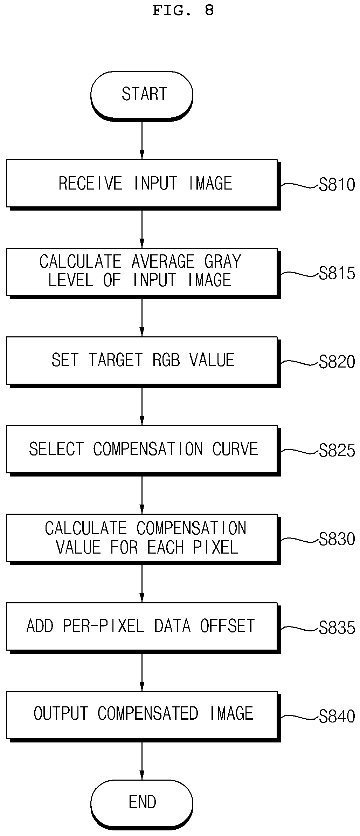

Therefore, the present disclosure proposes a method for compensating for a decrease in luminance level and a color shift at the side of the OLED panel 210. In particular, the present disclosure proposes a method for compensating for a decrease in luminance level and a color shift at the side of the OLED panel 210 based on an angle with respect to a driver seat or a viewing angle of a driver. This will be described below with reference to FIG. 8 and subsequent figures.

FIG. 8 is a flowchart illustrating a method of operating a display apparatus for a vehicle according to an embodiment of the present disclosure.

Referring to FIG. 8, the signal processing device 170 in the vehicle display apparatus 100 according to an embodiment of the present disclosure receives an input image (S810).

The input image can be an image stored in the memory 140 or an image input via the transceiver 120 or the interface 130.

Next, the signal processing device 170 calculates an average gray level of the input image based on gray levels of the input image (S815).

Next, the signal processing device 170 calculates an average gray level of the input image based on gray levels of the input image (S815).

For example, the signal processing device 170 can calculate the average gray level of the input image based on respective gray levels of red, green, and blue of all pixels of the input image.

Next, based on the calculated average gray level, the signal processing device 170 can set a target red luminance level, a target green luminance level, and a target blue luminance level (S820).

For example, the signal processing device 170 can calculate red, green, and blue luminance levels at which a target pixel at a target position is perceived from a viewing angle of a driver seated in the driver seat MST, and based thereon, can set the target red luminance level, the target green luminance level, and the target blue luminance level.

Next, based on the target red luminance level, the target green luminance level, and the target blue luminance level, the signal processing device 170 can select one compensation curve from among a plurality of compensation curves (S825).

For example, the signal processing device 170 can calculate the plurality of compensation curves based on a quadratic regression equation, and can calculate missing intermediate gray levels using interpolation.

Then, the signal processing device 170 can select, from among the plurality of compensation curves, a compensation curve that is closest to the average gray level of the input image.

That is, the signal processing device 170 can select a compensation curve that causes all areas within the display 180 to appear the same as the target pixel at the target position.

Next, the signal processing device 170 can calculate a per-pixel variation based on the selected compensation curve (S830).

The per-pixel variation can include a per-pixel luminance variation and a per-pixel color variation.

Then, the signal processing device 170 can add a per-pixel data offset based on the per-pixel variation (S835).

The per-pixel data offset can include a per-pixel luminance offset.

For example, the signal processing device 170 can add a red luminance offset to a red gray level of each pixel of the input image to calculate a red luminance level for each pixel.

Similarly, the signal processing device 170 can add a green luminance offset to a green gray level of each pixel of the input image to calculate a green luminance level for each pixel.

Similarly, the signal processing device 170 can add a blue luminance offset to a blue gray level of each pixel of the input image to calculate a blue luminance level for each pixel.

Meanwhile, the per-pixel data offset can include a per-pixel luminance offset and a per-pixel color offset.

For example, the signal processing device 170 can add a red luminance offset and a red color offset to a red gray level of each pixel of the input image.

Similarly, the signal processing device 170 can add a green luminance offset and a green color offset to a green gray level of each pixel of the input image.

Similarly, the signal processing device 170 can add a blue luminance offset and a blue color offset to a blue gray level of each pixel of the input image.

Then, the signal processing device 170 can output an image signal corresponding to a compensated image based on the offsets added to the input image (S840).

That is, the signal processing device 170 can output an image signal including a red luminance level, a green luminance level, and a blue luminance level for each pixel based on the offsets added to the input image. Accordingly, it is possible to perform luminance compensation and color compensation for each pixel.

Meanwhile, the per-pixel variation in step 830 (S830) can include a per-pixel luminance variation based on an angle between a pixel of the display 180 and the driver seat MST, and a per-pixel color variation. Accordingly, it is possible to compensate for luminance and color distortion according to the angle or distance between the driver seat and the display, with respect to the driver seat MST. Further, it is possible to perform image quality processing based on a viewing angle.

According to FIG. 8, the signal processing device 170 in the vehicle display apparatus 100 according to an embodiment of the present disclosure performs luminance compensation and color compensation for each pixel based on an angle between a pixel of the display 180 and the driver seat MST, and an average gray level of an input image, and outputs an image signal on which the luminance compensation and the color compensation are performed. Accordingly, it is possible to compensate for luminance and color distortion according to the angle or distance between the driver seat and the display. Further, it is possible to perform image quality processing based on a viewing angle.

Meanwhile, the signal processing device 170 can perform first luminance compensation and color compensation for each pixel based on an angle between a pixel of the display 180 and the driver seat MST, and can perform second luminance compensation for each pixel based on an average gray level of an input image. Accordingly, it is possible to compensate for luminance and color distortion according to the angle or distance between the driver seat MST and the display.

Meanwhile, the signal processing device 170 can calculate an average gray level of an input image based on gray levels of the input image, can select one compensation curve from among a plurality of compensation curves based on the average gray level, and can perform luminance compensation and color compensation for each pixel based on an angle between a pixel of the display 180 and the driver seat MST, and the selected compensation curve. Accordingly, it is possible to compensate for luminance and color distortion according to the angle or distance between the driver seat and the display.

Meanwhile, the signal processing device 170 can perform luminance compensation and color compensation for each pixel based on a target pixel among a plurality of pixels of the display 180. Accordingly, it is possible to compensate for luminance and color distortion according to the angle or distance between the driver seat and the display.

Meanwhile, the signal processing device 170 can perform luminance compensation and color compensation for each pixel based on a target pixel among a plurality of pixels of the display 180.

Meanwhile, the signal processing device 170 can set the first pixel P1, which corresponds to a central pixel among the plurality of pixels of the display 180 of FIG. 7, as the target pixel.

Meanwhile, the signal processing device 170 can not perform luminance compensation and color compensation on the target pixel. Accordingly, it is possible to perform luminance compensation and color compensation in an efficient manner.

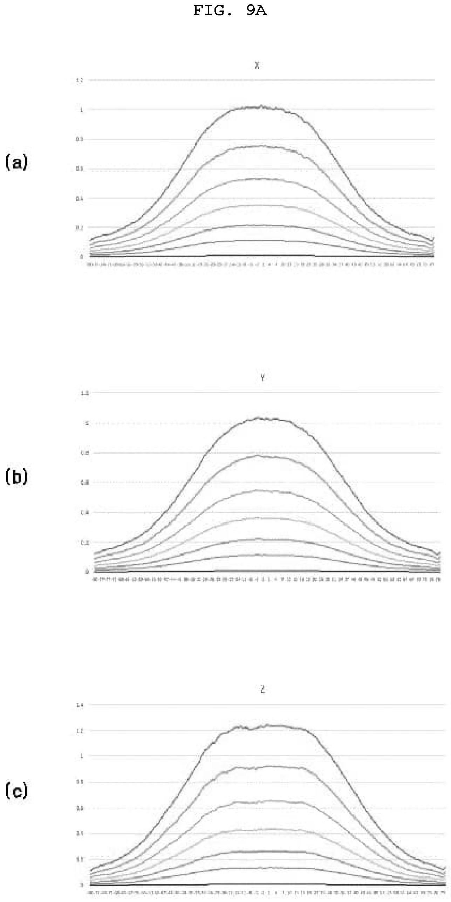

FIGS. 9A to 11C are diagrams referred to in the description of FIG. 8.

FIG. 9A illustrates distributions of tristimulus value data according to viewing angles for R, G, and B gray levels.

Referring to the figure, (a) of FIG. 9A illustrates a distribution of X data of tristimulus values according to a horizontal angle, while a vertical angle with respect to white is fixed at approximately 0 degrees.

In (a) of FIG. 9A, a horizontal axis represents a horizontal angle with respect to white, and a vertical axis represents a level of the X data of the tristimulus values.

In particular, (a) of FIG. 9A illustrates X data of the tristimulus values for a plurality of gray levels.

In the figure, the X data corresponding to a gray level of 255 and a horizontal angle of 0 degrees has the highest level, and the level of the X data decreases as the horizontal angle increases.

Meanwhile, when the gray level is 224, the level of the X data at a horizontal angle of 0 degrees is illustrated as being approximately 0.75 times as compared with when the gray level is 255.

Meanwhile, when the gray level is 192, the level of the X data at a horizontal angle of 0 degrees is illustrated as being approximately 0.55 times as compared with when the gray level is 255.

Meanwhile, when the gray level is 160, the level of the X data at a horizontal angle of 0 degrees is illustrated as being approximately 0.35 times as compared with when the gray level is 255.

Meanwhile, when the gray level is 128, the level of the X data at a horizontal angle of 0 degrees is illustrated as being approximately 0.2 times as compared with when the gray level is 255.

Meanwhile, when the gray level is 96, the level of the X data at a horizontal angle of 0 degrees is illustrated as being approximately 0.1 times as compared with when the gray level is 255.

Meanwhile, when the gray level is 64, the level of the X data at a horizontal angle of 0 degrees is illustrated as being approximately 0.1 times as compared with when the gray level is 255.

Meanwhile, when the gray level is 32, the level of the X data at a horizontal angle of 0 degrees is illustrated as being approximately 0.05 times as compared with when the gray level is 255.

Meanwhile, when the gray level is 16, the level of the X data at a horizontal angle of 0 degrees is illustrated as being approximately 0.04 times as compared with when the gray level is 255.

In (b) of FIG. 9A, a horizontal axis represents a horizontal angle with respect to white, and a vertical axis represents a level of Y data of tristimulus values.

In particular, (b) of FIG. 9A illustrates Y data of the tristimulus values with respect to white for a plurality of gray levels.

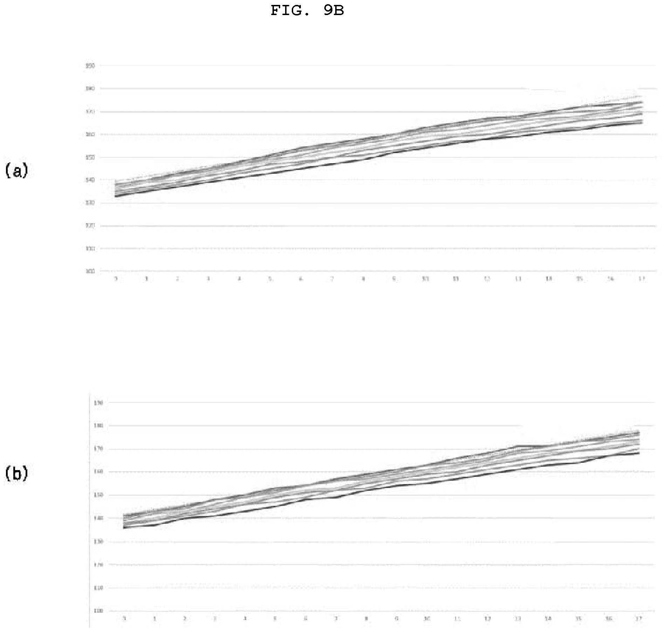

Similar to (a) of FIG. 9A, (b) of FIG. 9A illustrates respective levels of Y data when gray levels are 224, 192, 160, 128, 96, 64, 34, and 16.

In (c) of FIG. 9A, a horizontal axis represents a horizontal angle, and a vertical axis represents a level of Z data of tristimulus values with respect to white.

In particular, (c) of FIG. 9A illustrates Z data of the tristimulus values with respect to white for a plurality of gray levels.

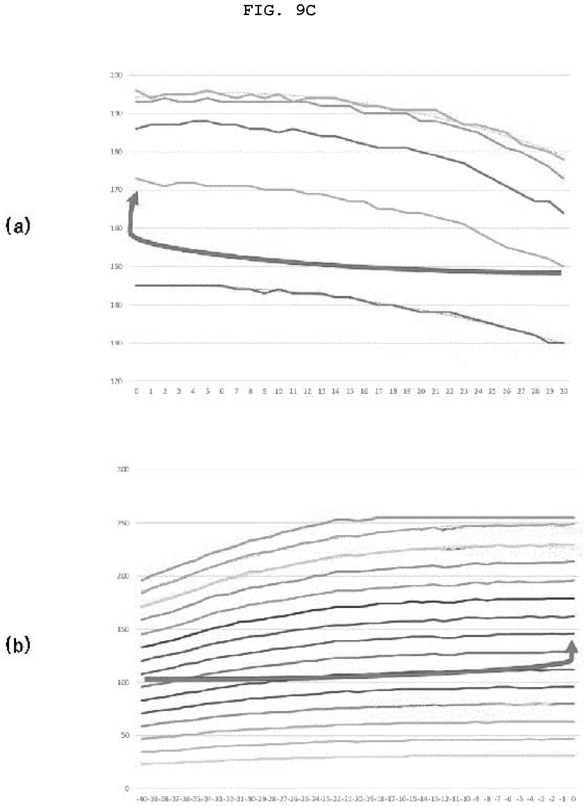

Similar to (a) of FIG. 9A, (c) of FIG. 9A illustrates respective levels of Z data when gray levels are 224, 192, 160, 128, and 96.

Meanwhile, when an input image is a white image, the signal processing device 170 according to an embodiment of the present disclosure can perform luminance compensation and color compensation for each pixel.

In particular, the signal processing device 170 can calculate a luminance variation and a color variation for each gray level based on differences in tristimulus values (X, Y, Z) across gray levels. Accordingly, it is possible to compensate for luminance and color distortion according to the angle or distance between the driver seat and the display.

Meanwhile, when a color space of an input image is a Lab-based color space, the signal processing device 170 can convert the Lab-based color space into an RGB-based color space.

In this case, the signal processing device 170 can convert the Lab-based color space into a tristimulus value (X, Y, Z)-based color space, and convert the tristimulus value (X, Y, Z)-based color space into the RGB-based color space.

In addition, when calculating an average gray level of the input image, the signal processing device 170 can calculate the average gray level of the input image based on the RGB-based color space of the input image.

That is, the signal processing device 170 can calculate an average of all red gray levels, green gray levels, and blue gray levels of all pixels of the input image to thereby calculate the average gray level of the input image.

FIG. 9B shows test results for verifying whether independent control of respective RGB components is possible in order to implement various mixed colors.

Referring to the figure, (a) of FIG. 9B is a graph illustrating measurement results of slopes of an R (red) component according to viewing angles for each gray level in a single red color.

Specifically, a horizontal axis represents a viewing angle, and a vertical axis represents a brightness level of the R (red) component for each gray level.

Meanwhile, the graph of (a) of FIG. 9B can represent red components in the red color when gray levels are 224, 192, 160, 128, 96, 64, 32, and 16, respectively.

of FIG.9B is a graph illustrating an R (red) component in a yellow color for each gray level.

Specifically, a horizontal axis represents a viewing angle, and a vertical axis represents a brightness level of the R (red) component.

Referring to the figure, similar to the case of the single color in (a) of FIG. 9B, in a mixed color, the red component increases as the gray level increases.

Meanwhile, the graph of (b) of FIG. 9B can represent red components in the yellow color when gray levels are 224, 192, 160, 128, 96, 64, 32, and 16, respectively.

As a result, according to FIG. 9B, trends of R (red), G (green), and B (blue) components are similar regardless of whether the color is a single color or a mixed color.

Referring to the figure, in a single color, the red component increases as the gray level increases. Therefore, slopes of R (red), G (green), and B (blue) components according to viewing angles for single colors of red, green, and blue are similar to slopes of R (red), G (green), and B (blue) components for mixed colors, indicating that compensation of mixed colors can be achieved by controlling red, green, and blue pixels.

Thus, upon offset compensation, the signal processing device 170 according to an embodiment of the present disclosure can perform color compensation by applying red-, green-, and blue-specific offset algorithms for each pixel.

FIG. 9C illustrates compensation based on a vertical direction and compensation based on a horizontal direction.

In (a) of FIG. 9C, a horizontal axis represents a vertical angle, and a vertical axis represents a red component.

As the vertical angle changes from 0 degrees to ±30 degrees, R (red), G (green), and B (blue) components for each gray level decrease.

Meanwhile, as the vertical angle increases, a red component level for each horizontal angle decreases.

Accordingly, the signal processing device 170 according to an embodiment of the present disclosure can perform compensation for each horizontal angle based on the vertical direction.

In particular, the signal processing device 170 can control a variation of luminance compensation or a variation of color compensation corresponding to the horizontal angle to increase as the vertical angle increases. Accordingly, it is possible to compensate for luminance and color distortion according to the angle or distance between the driver seat and the display.

In (b) of FIG. 9C, a horizontal axis represents a horizontal angle, and a vertical axis represents R (red), G (green), and B (blue) components.

As the horizontal angle changes from 0 degrees to ±40 degrees, the R (red), G (green), and B (blue) components for each gray level increase.

Thus, the signal processing device 170 according to an embodiment of the present disclosure can perform compensation based on the horizontal direction according to a gray level.

In particular, the signal processing device 170 can control a variation of luminance compensation or a variation of color compensation corresponding to the horizontal angle to increase as the horizontal angle changes from 0 degrees to ±40 degrees. Accordingly, it is possible to compensate for luminance and color distortion according to the angle or distance between the driver seat and the display.

Referring to FIG. 9C, the signal processing device 170 according to an embodiment of the present disclosure can calculate a luminance distortion variation and a color distortion variation according to a horizontal viewing angle and a vertical viewing angle at a target position or a target pixel.

In addition, the signal processing device 170 can calculate a plurality of compensation curves based on the luminance distortion variation and the color distortion variation according to the horizontal viewing angle and the vertical viewing angle.

In this case, the plurality of compensation curves can be compensation curves based on an inverse regression model.

Meanwhile, the signal processing device 170 can set target red, green, and blue luminance levels for a target position or a target pixel within the display 180, for example, a central position.

In addition, from a viewing angle of a driver seated in the driver seat MST, the signal processing device 170 can search, from the compensation curves, for an output value that causes all areas within the display 180 to appear the same as the target position or the target pixel.

That is, from the viewing angle of the driver seated in the driver seat MST, the signal processing device 170 can select a compensation curve that causes all areas within the display 180 to appear the same as the target position or the target pixel.

Further, the signal processing device 170 can perform independent compensation of a red luminance level, a green luminance level, and a blue luminance level using the selected compensation curve. Accordingly, it is possible to compensate for luminance and color distortion according to the angle or distance between the driver seat and the display.

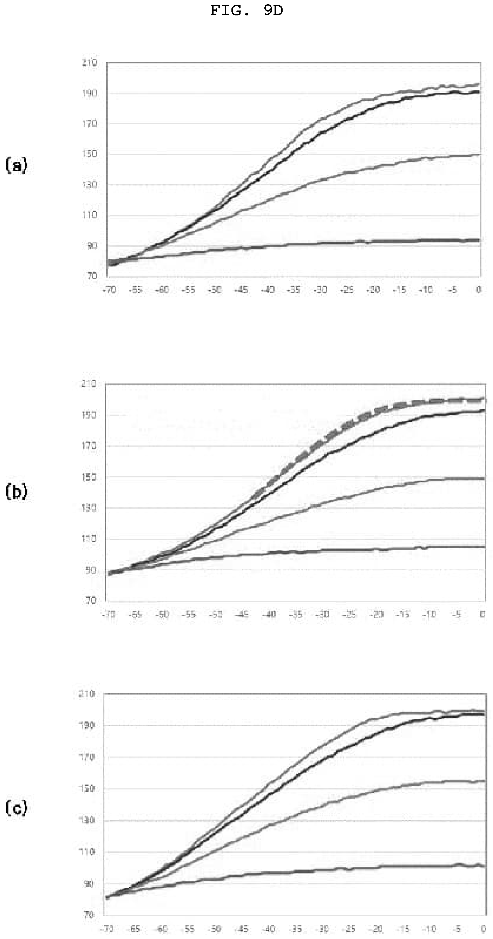

FIG. 9D illustrates various examples of compensation curves for each color.

Referring to the figure, (a) of FIG. 9D illustrates a plurality of compensation curves for a red color.

In(a) of FIG. 9D, a horizontal axis represents a horizontal angle, and a vertical axis represents a level of an R (red) component.

In the figure, it is illustrated that a luminance level of the R (red) component increases as the horizontal angle changes from 0 degrees to ±70 degrees.

In particular, it is illustrated that when the horizontal angle is 0 degrees and the vertical angle is 0 degrees, the luminance level of the R (red) component is approximately 195; when the horizontal angle is 0 degrees and the vertical angle is 20 degrees, the luminance level of the R (red) component is approximately 190; when the horizontal angle is 0 degrees and the vertical angle is 40 degrees, the luminance level of the R (red) component is approximately 150; and when the horizontal angle is 0 degrees and the vertical angle is 60 degrees, the luminance level of the R (red) component is approximately 95.

(b) of FIG. 9D illustrates a plurality of compensation curves for a G (green) component.

In (b) of FIG. 9D, a horizontal axis represents a horizontal angle, and a vertical axis represents a level of a G (green) component.

In the figure, it is illustrated that a luminance level of the G (green) component increases as the horizontal angle changes from 0 degrees to ±70 degrees.

In particular, it is illustrated that when the horizontal angle is 0 degrees and the vertical angle is 0 degrees, the luminance level of the G (green) component is approximately 195; when the horizontal angle is 0 degrees and the vertical angle is 20 degrees, the luminance level of the G (green) component is approximately 190; when the horizontal angle is 0 degrees and the vertical angle is 40 degrees, the luminance level of the G (green) component is approximately 150; and when the horizontal angle is 0 degrees and the vertical angle is 60 degrees, the luminance level of the G (green) component is approximately 105.

of FIG. 9D illustrates a plurality of compensation curves for a B (blue) component.

In (c) of FIG. 9D, a horizontal axis represents a horizontal angle, and a vertical axis represents a level of a B (blue) component.

In the figure, it is illustrated that a luminance level of the B (blue) component increases as the horizontal angle changes from 0 degrees to ±70 degrees.

In particular, it is illustrated that when the horizontal angle is 0 degrees and a vertical angle is 0 degrees, the luminance level of the B (blue) component is approximately 195; when the horizontal angle is 0 degrees and the vertical angle is 20 degrees, the luminance level of the B (blue) component is approximately 190; when the horizontal angle is 0 degrees and the vertical angle is 40 degrees, the luminance level of the B (blue) component is approximately 155; and when the horizontal angle is 0 degrees and the vertical angle is 60 degrees, the luminance level of the B (blue) component is approximately 100.

According to FIG. 9D, the signal processing device 170 can calculate a compensation curve for each color within a pixel, for each gray level, for each horizontal angle, or for each vertical angle.

Meanwhile, the signal processing device 170 can calculate an average gray level of an input image by calculating averages of all red gray levels, green gray levels, and blue gray levels of all pixels of the input image.

Meanwhile, based on the average gray level of the input image, the signal processing device 170 can select one compensation curve from among compensation curves for various gray levels.

Here, the selected compensation curve can be a compensation curve that is closest to the average gray level of the input image.

That is, based on the average gray level of the input image, the signal processing device 170 can select, from among the compensation curves for various gray levels, a compensation curve that is closest to the average gray level of the input image.

Meanwhile, the plurality of compensation curves can include horizontal compensation curves or vertical compensation curves in units of 16 gray levels from gray level 0 to gray level 255.

The signal processing device 170 can calculate the plurality of compensation curves based on a quadratic regression equation, and can calculate missing intermediate gray levels using interpolation.

Meanwhile, based on the selected compensation curve, the signal processing device 170 can perform independent compensation of a red luminance level, a green luminance level, and a blue luminance level.

Meanwhile, the signal processing device 170 can perform compensation, based on a selected compensation curve, for each color within a pixel, for each gray level, for each horizontal angle, or for each vertical angle.

That is, as illustrated in FIG. 7, the signal processing device 170 can perform luminance compensation and color compensation for each pixel based on an angle between a pixel of the display 180 and the driver seat MST, and an average gray level of an input image, and can output an image signal on which the luminance compensation and the color compensation are performed. Accordingly, it is possible to compensate for luminance and color distortion according to the angle or distance between the driver seat and the display. Further, it is possible to perform image quality processing based on a viewing angle.

For example, the signal processing device 170 can calculate an average gray level of the input image based on gray levels of the input image, can select one compensation curve from among a plurality of compensation curves based on the average gray level, and can perform luminance compensation and color compensation for each pixel based on an angle between a pixel of the display 180 and the driver seat MST, and the selected compensation curve.

Specifically, the signal processing device 170 can change a first luminance level of the input image corresponding to a first pixel P1 of the display 180 to a second luminance level, can change a third luminance level of the input image corresponding to a second pixel P2 of the display 180, which is closer to the driver seat than the first pixel P1, to a fourth luminance level, and can control a difference between the fourth luminance level and the third luminance level to be greater than a difference between the second luminance level and the first luminance level. Accordingly, it is possible to compensate for luminance and color distortion according to the angle or distance between the driver seat and the display.

For example, when the first luminance level of the input image corresponding to the first pixel P1 is 100, the signal processing device 170 can maintain the level at 100, and when the third luminance level of the input image corresponding to the second pixel P2 closer to the driver seat is 120, the signal processing device 170 can change the level of 120 to 100.

Accordingly, a difference between the second luminance level and the first luminance level is 0, and a difference between the fourth luminance level and the third luminance level is 20, such that the difference between the fourth luminance level and the third luminance level is greater than the difference between the second luminance level and the first luminance level.

Meanwhile, the signal processing device 170 can control a luminance variation of a luminance level of the input image corresponding to the second pixel P2 of the display 180 in FIG. 7, which is closer to the driver seat MST than the first pixel P1, to be greater than a luminance variation of a luminance level of the input image corresponding to the first pixel P1 of the display 180. Accordingly, it is possible to compensate for luminance and color distortion according to the angle or distance between the driver seat and the display.

Meanwhile, the signal processing device 170 can control a luminance variation of a luminance level of the input image corresponding to the third pixel P3 of the display 180 in FIG. 7, which is farther from the driver seat MST than the first pixel P1, to be greater than a luminance variation of a luminance level of the input image corresponding the first pixel P1. Accordingly, it is possible to compensate for luminance and color distortion according to the angle or distance between the driver seat and the display.

For example, when a first luminance level of the input image corresponding to the first pixel P1 of the display 180 is 100, the signal processing device 170 can maintain the level of 100 at a second luminance level of 100, and when a luminance level of the input image corresponding to the third pixel P3 farther from the driver seat MST is 80, the signal processing device 170 can increase the level of 80 to 100.

Accordingly, a luminance variation of the luminance level of the input image corresponding to the third pixel P3 is 20, which is greater than a luminance variation of the luminance level of the input image corresponding to the first pixel P1, which is 0. Thus, it is possible to compensate for luminance and color distortion according to the angle or distance between the driver seat and the display.

In another example, when a first luminance level of the input image corresponding to the first pixel P1 of the display 180 is 100, the signal processing device 170 can maintain the level of 100 at a second luminance level of 100, when a third luminance level of the input image corresponding to the second pixel P2 closer to the driver seat MST is 120, the signal processing device 170 can decrease the level of 120 to 100, and when a luminance level of the input image corresponding to the third pixel P3 farther from the driver seat MST is 80, the signal processing device 170 can increase the level of 80 to 100.

Accordingly, it is possible to compensate for luminance and color distortion according to the angle or a distance between the driver seat and the display.

Meanwhile, the signal processing device 170 can control a color variation of the input image corresponding to the second pixel P2 of the display 180 in FIG. 7, which is closer to the driver seat MST than the first pixel P1, to be greater than a color variation of the input image corresponding to the first pixel P1 of the display 180. Accordingly, it is possible to compensate for luminance and color distortion according to the angle or distance between the driver seat MST and the display 180.

Meanwhile, the signal processing device 170 can control a color variation of the input image corresponding to the third pixel P3 of the display 180 in FIG. 7, which is farther from the driver seat MST than the first pixel P1, to be greater than a color variation of the input image corresponding to the first pixel P1 of the display 180. Accordingly, it is possible to compensate for luminance and color distortion according to the angle or distance between the driver seat and the display.

Meanwhile, the signal processing device 170 can control a variation of a blue luminance level of the input image corresponding to a predetermined pixel of the display 180 to be less than a variation of a green luminance level or a variation of a red luminance level. Accordingly, it is possible to compensate for luminance and color distortion according to the angle or distance between the driver seat MST and the display 180.

Meanwhile, the signal processing device 170 can control a variation of luminance compensation or a variation of color compensation for each pixel to remain constant even when the average gray level of the input image changes.

For example, even when the average gray level of the input image increases, the signal processing device 170 can control the variation of the luminance compensation or the variation of the color compensation for each pixel to remain constant.

In another example, even when the average gray level of the input image decreases, the signal processing device 170 can control the variation of the luminance compensation or the variation of the color compensation for each pixel to remain constant without increasing or decreasing.

Meanwhile, the signal processing device 170 can perform luminance compensation and color compensation for each pixel, and in response to the input image being a white image, the signal processing device 170 can control a luminance level of the second pixel P2 of the display 180, which is closer to the driver seat MST than the first pixel P1, to be less than a luminance level of the first pixel P1 of the display 180. Accordingly, it is possible to compensate for luminance distortion and color distortion according to the angle or distance between the driver seat MST and the display 180.

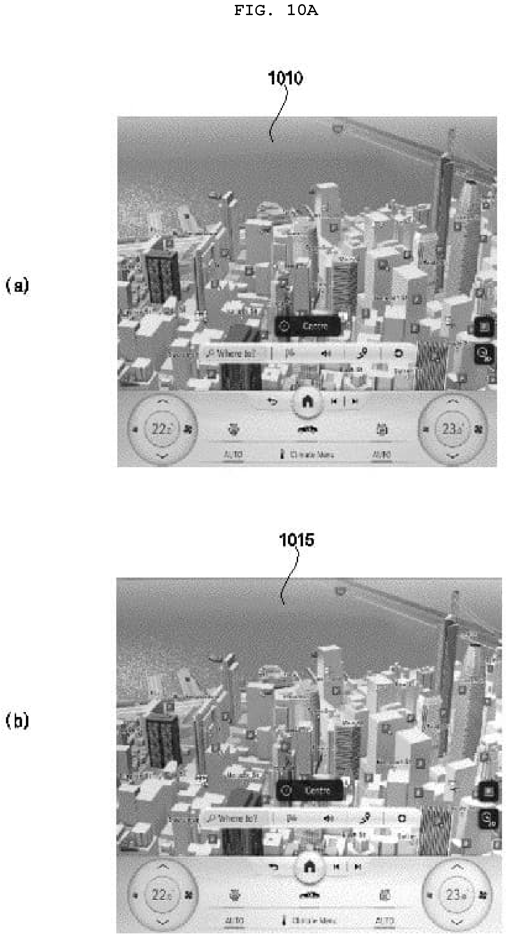

FIGS. 10A to 10D illustrate various examples of an input image and an image subjected to luminance compensation and color compensation.

FIG. 10A illustrates a first input image 1010 corresponding to a map image and a first compensated image 1015 on which luminance compensation and color compensation are performed.

The signal processing device 170 can control the first compensated image 1015 to be displayed on the second display 180b. Accordingly, it is possible to compensate for luminance and color distortion of the map image based on a viewing angle.

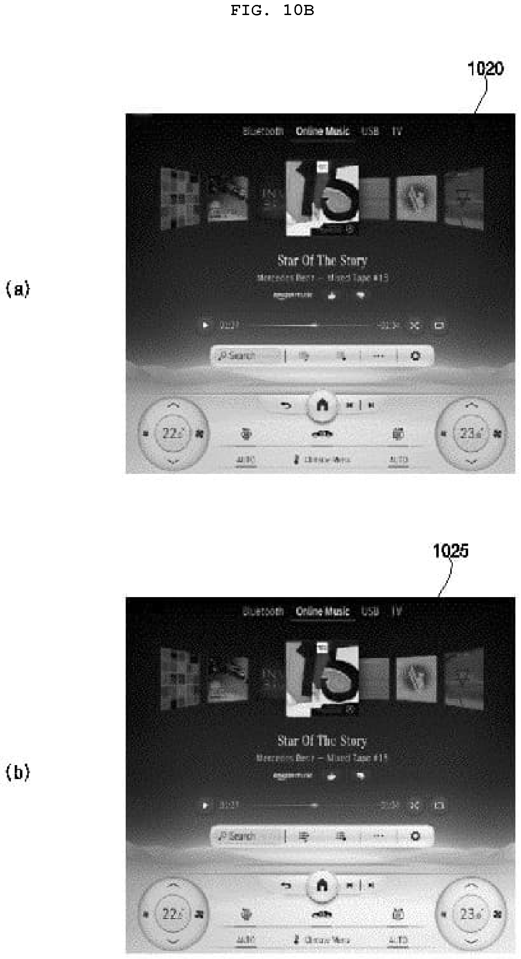

FIG. 10B illustrates a second input image 1020 corresponding to a music playback image and a second compensated image 1025 on which luminance compensation and color compensation are performed.

The signal processing device 170 can control the second compensated image 1025 to be displayed on the second display 180b. Accordingly, it is possible to compensate for luminance and color distortion of the music playback image based on a viewing angle.

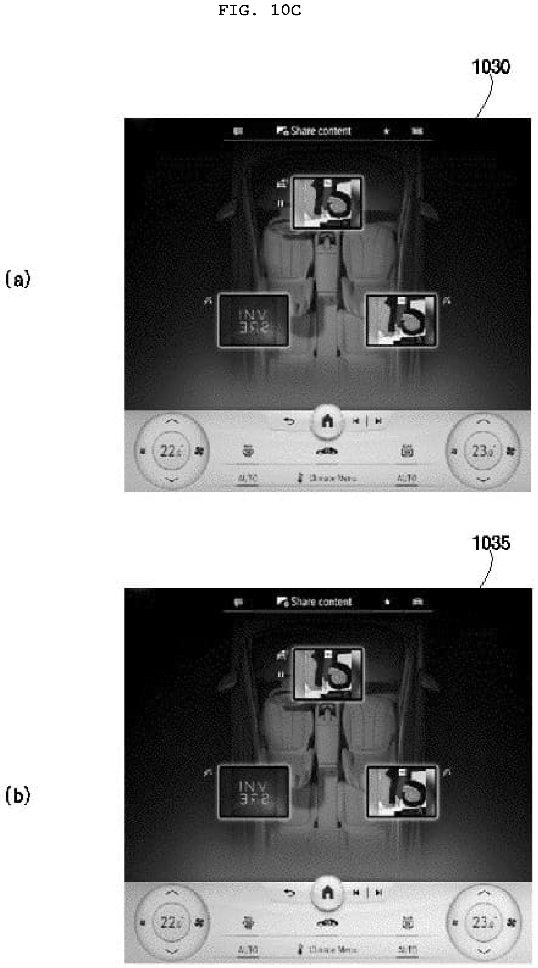

FIG. 10C illustrates a third input image 1030 corresponding to an in-vehicle image and a third compensated image 1035 on which luminance compensation and color compensation are performed.

The signal processing device 170 can control the third compensated image 1035 to be displayed on the second display 180b. Accordingly, it is possible to compensate for luminance and color distortion of the in-vehicle image based on a viewing angle.

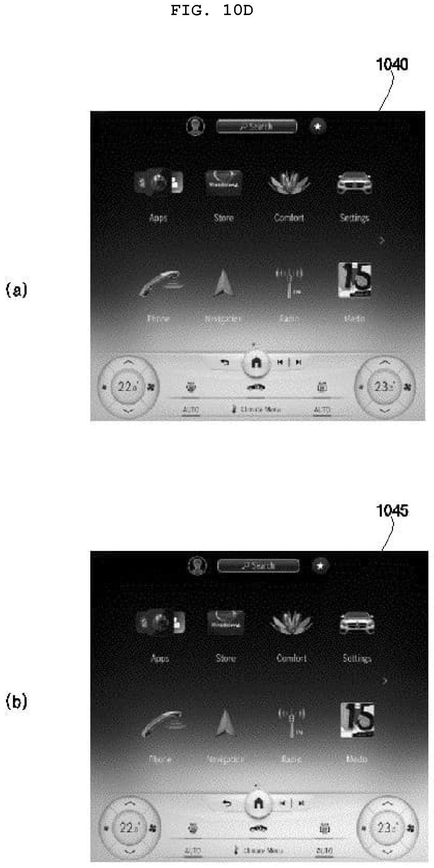

FIG. 10D illustrates a fourth input image 1040 corresponding to a menu image and a fourth compensated image 1045 on which luminance compensation and color compensation are performed.

The signal processing device 170 can control the fourth compensated image 1045 to be displayed on the second display 180b. Accordingly, it is possible to compensate for luminance and color distortion of the menu image based on a viewing angle.

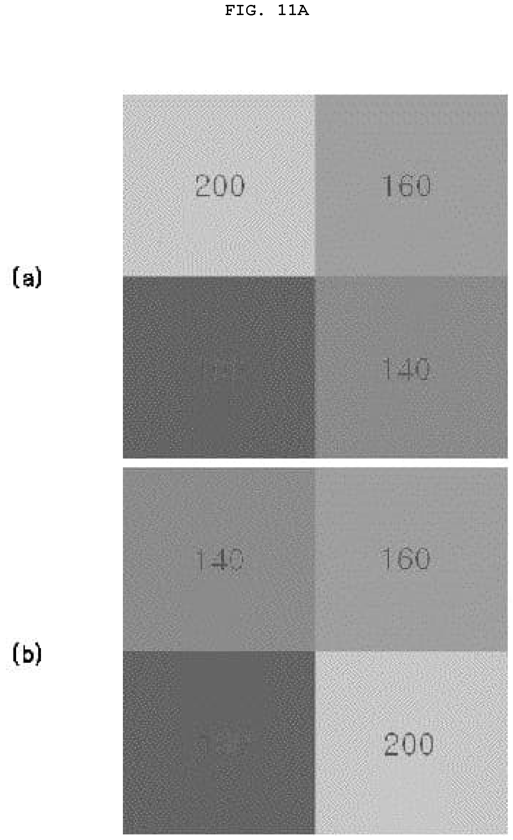

FIGS. 11A to 11C show comparison results between using compensation curves matched to gray levels of respective areas (or regions) of an input image and using an average compensation curve for an entire area, when gray levels differ among areas of the input image.

(a) of FIG. 11A illustrates that gray levels of respective areas in a first input image are 200, 160, 100, and 140

That is, (a) of FIG. 11A illustrates that a gray level of an upper-left area of the first input image is 200, a gray level of an upper-right area is 160, a gray level of a lower-left area is 100, and a gray level of a lower-right area is 140.

An average gray level of the first input image can be 150.

(b) of FIG. 11A illustrates that gray levels of respective areas in a second input image are 140, 160, 100, and 200.

That is, (b) of FIG. 11A illustrates that a gray level of an upper-left area of the second input image is 140, a gray level of an upper-right area is 160, a gray level of a lower-left area is 100, and a gray level of a lower-right area is 200.

An average gray level of the second input image can be 150.

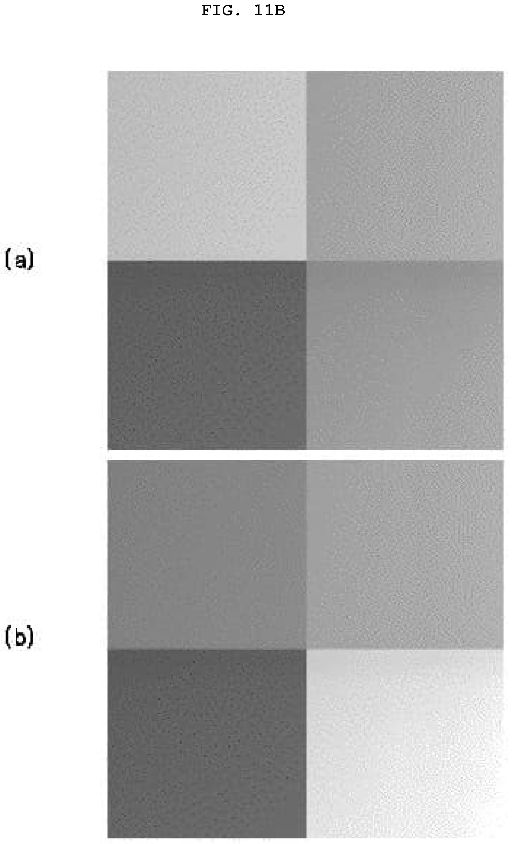

FIG. 11B illustrates compensation for luminance and color distortion based on compensation curves for respective areas of the input image of FIG. 11A.

For example, in (a) of FIG. 11B, the signal processing device 170 can select compensation curves corresponding to the gray levels of the respective areas in the first input image, and can compensate for luminance and color distortion of each area of the first input image based on the selected compensation curves. Accordingly, it is possible to compensate for luminance distortion and color distortion according to the angle or distance between the driver seat and the display.

Meanwhile, in (b) of FIG. 11B, the signal processing device 170 can select compensation curves corresponding to the gray levels of the respective areas in the second input image, and can compensate for luminance and color distortion of each area of the second input image based on the selected compensation curves. Accordingly, it is possible to compensate for luminance distortion and color distortion according to the angle or distance between the driver seat and the display.

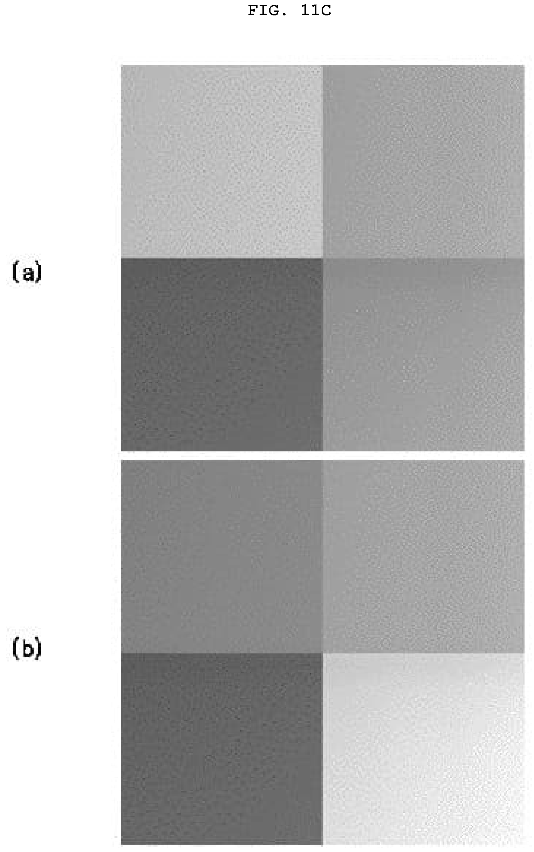

FIG. 11C illustrates compensation for luminance and color distortion by calculating an average gray level of all pixels of the input image of FIG. 11A and selecting one compensation curve from among a plurality of compensation curves based on the average gray level.

For example, the signal processing device 170 can calculate an average gray level of the input image based on gray levels of all pixels in the first input image of FIG. 11A, can select one compensation curve from among a plurality of compensation curves based on the average gray level, and can compensate for luminance and color distortion of each area of the first input image based on the selected compensation curve. Accordingly, it is possible to compensate for luminance and color distortion according to the angle or distance between the driver seat and the display.

Meanwhile, the signal processing device 170 can calculate an average gray level of the input image based on gray levels of all pixels in the second input image of FIG. 11A, can select one compensation curve from among a plurality of compensation curves based on the average gray level, and can compensate for luminance and color distortion of each area of the second input image based on the selected compensation curve. Accordingly, it is possible to compensate for luminance and color distortion according to the angle or distance between the driver seat and the display.

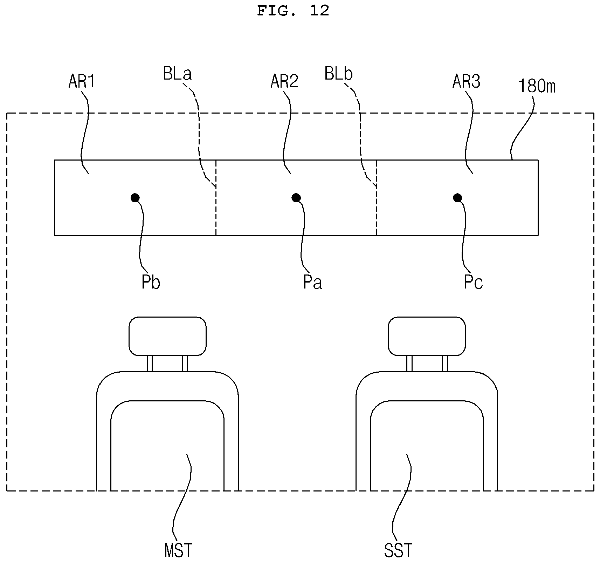

FIG. 12 illustrates another example of a display apparatus for a vehicle according to an embodiment of the present disclosure.

Referring to FIG. 12, the vehicle display apparatus 100 according to an embodiment of the present disclosure can include a display 180m extending from a driver seat MST to a passenger seat SST.

According to an embodiment of the present disclosure, the display 180m can include a first area Ar1 on a left side and a second area Ar2 on a right side with respect to a first boundary BLa, and a third area Ar3 on a right side with respect to a second boundary BLb.

The first area Ar1 can correspond to a cluster area or a cluster display area, the second area Ar2 can correspond to an information display area or a center information display (CID) area, and the third area Ar3 can correspond to a passenger seat area or a co-driver display (CDD) area.

Meanwhile, the signal processing device 170 can perform luminance compensation and color compensation for each pixel based on a first pixel Pb in the first area Ar1, which is a target pixel, among the plurality of areas of the display 180m in FIG. 12.

Specifically, the signal processing device 170 can change a first luminance level of the first pixel Pb in the first area Ar1 of the display 180m in FIG. 12 to a second luminance level, can change a third luminance level of a second pixel Pa in the second area Ar2, which is farther than the first pixel Pb in the first area Ar1, to a fourth luminance level, and can control a difference between the fourth luminance level and the third luminance level to be greater than a difference between the second luminance level and the first luminance level. Accordingly, it is possible to compensate for luminance and color distortion according to the angle or distance between the driver seat and the display.

For example, when the first luminance level of the input image corresponding to the first pixel Pb of the display 180m is 100, the signal processing device 170 can maintain the level at 100, and when the third luminance level of the input image corresponding to the second pixel Pa farther from the driver seat is 90, the signal processing device 170 can change the level of 90 to 100.

Meanwhile, the signal processing device 170 can change the third luminance level of the second pixel Pa in the second area Ar2 of the display 180m in FIG. 12 to a fourth luminance level, can change a fifth luminance level of a third pixel Pc in the third area Ar3, which is farther than the second pixel Pa in the second area Ar2, to a sixth luminance level, and can control a difference between the sixth luminance level and the fifth luminance level to be greater than a difference between the fourth luminance level and the third luminance level. Accordingly, it is possible to compensate for luminance and color distortion according to the angle or distance between the driver seat and the display.

For example, when the third luminance level of the input image corresponding to the second pixel Pa of the display 180m is 90, the signal processing device 170 can change the level of 90 to 100, and when the fifth luminance level of the input image corresponding to the third pixel Pc farther from the driver seat is 80, the signal processing device 170 can change the level of 80 to 100.

Meanwhile, the signal processing device 170 can control a luminance variation of a luminance level of the input image corresponding to the second pixel Pa of the display 180m in FIG. 12, which is farther from the driver seat MST than the first pixel Pb, to be greater than a luminance variation of a luminance level the input image corresponding to the first pixel Pb of the display 180m. Accordingly, it is possible to compensate for luminance and color distortion according to the angle or distance between the driver seat and the display.

Meanwhile, the signal processing device 170 can control a luminance variation of a luminance level of the input image corresponding to the third pixel Pc of the display 180m in FIG. 12, which is farther from the driver seat MST than the first pixel Pb, to be greater than a luminance variation of a luminance level of the input image corresponding to the first pixel Pb of the display 180m. Accordingly, it is possible to compensate for luminance and color distortion according to the angle or distance between the driver seat and the display.

Meanwhile, the signal processing device 170 can control a color variation of the input image corresponding to the second pixel Pa of the display 180m in FIG. 12, which is farther from the driver seat MST than the first pixel Pb, to be greater than a color variation of the input image corresponding to the first pixel Pb of the display 180m. Accordingly, it is possible to compensate for luminance and color distortion according to the angle or distance between the driver seat and the display.

Meanwhile, the signal processing device 170 can control a color variation of the input image corresponding to the third pixel Pc of the display 180m in FIG. 12, which is farther from the driver seat MST than the first pixel Pb, to be greater than a color variation of the input image corresponding to the first pixel Pb of the display 180m. Accordingly, it is possible to compensate for luminance and color distortion according to the angle or distance between the driver seat and the display.

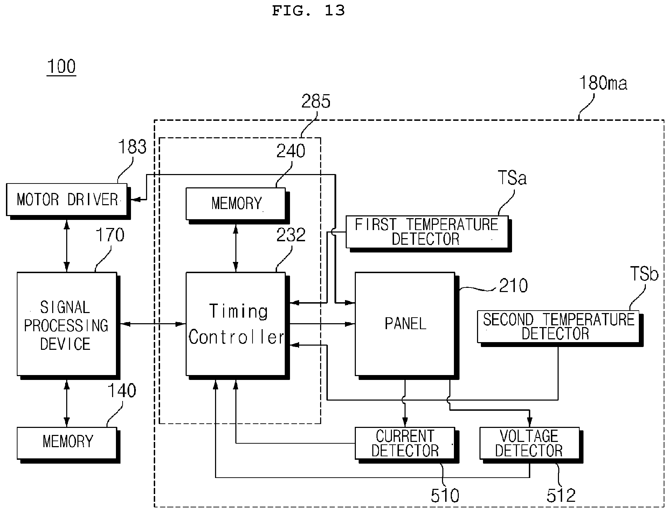

FIG. 13 illustrates an example of an internal block diagram of the display apparatus for a vehicle of FIG. 12.

Referring to FIG. 13, the vehicle display apparatus 100 according to an embodiment of the present disclosure can include a display 180ma, a signal processing device 170, a memory 140, and a motor driver 183.

The motor driver 183 can operate to adjust a height of the display 180ma.

For example, when the OLED panel 210 is in a pop-up mode, the motor driver 183 can control the height of the display 180ma to be a first height hb.

In another example, when the OLED panel 210 is in a pop-down mode, the motor driver 183 can control the height of the display 180ma to be a second height ha lower than the first height hb.

Meanwhile, the display 180ma in the vehicle display apparatus 100 according to an embodiment of the present disclosure can include the OLED panel 210 and a driving controller 285 configured to output a driving signal to the OLED panel 210.

Meanwhile, the display 180ma of the vehicle display apparatus 100 according to an embodiment of the present disclosure can further include a first temperature detector TSa that is disposed in a first area of a rear surface of the OLED panel 210 and a second temperature detector TSb that is disposed in a second area of the rear surface of the OLED panel 210.

Meanwhile, the display 180ma of the vehicle display apparatus 100 according to an embodiment of the present disclosure can further include a current detector 510 configured to detect a current flowing through the OLED panel 210, and a voltage detector 512 configured to detect an organic light emitting voltage of the OLED panel 210.

The driving controller 285 can include a memory 240, and a timing controller 170 configured to output a driving signal to the OLED panel 210.

The driving controller 285 can transmit first detection temperature information from the first temperature detector TSa and second detection temperature information from the second temperature detector TSb to the signal processing device 170.

The driving controller 285 can transmit current information detected by the current detector 510 and voltage information from the voltage detector 512 to the signal processing device 170.

Meanwhile, the signal processing device 170 or the driving controller 285 can perform a first degradation compensation mode or a second degradation compensation mode according to a difference between a first detection temperature from the first temperature detector TSa disposed in a first display area Ara of the rear surface of the OLED panel 210 and a second detection temperature from the second temperature detector TSb disposed in a second display area Arb of the OLED panel 210.

Meanwhile, the signal processing device 170 or the driving controller 285 can control a magnitude of a luminance variation in the second degradation compensation mode to be greater than a magnitude of a luminance variation in the first degradation compensation mode. Accordingly, it is possible to reduce degradation in an adaptive manner based on the temperature of each area of the panel.

Meanwhile, the signal processing device 170 or the driving controller 285 can perform the first degradation compensation mode when a difference between a first detection temperature from the first temperature detector TSa and a second detection temperature from the second temperature detector TSb is less than a reference value, and can perform the second degradation compensation mode when the difference is equal to or greater than the reference value. Accordingly, it is possible to reduce degradation in an adaptive manner based on the temperature of each area of the panel.

Meanwhile, the signal processing device 170 or the driving controller 285 can perform the second degradation compensation mode when a difference between a first detection temperature and a second detection temperature is equal to or greater than a reference value and the second detection temperature is greater than the first detection temperature, and can control a magnitude of a luminance variation of the second display area Arb to be greater than a magnitude of a luminance variation of the first display area Ara in the second degradation compensation mode. Accordingly, it is possible to reduce degradation in an adaptive manner based on the temperature of each area of the panel.

Meanwhile, in a state where a cumulative degradation amount of the first display area Ara is greater than a cumulative degradation amount of the second display area Arb, when a difference between a first detection temperature and a second detection temperature is equal to or greater than a reference value and the second detection temperature is greater than the first detection temperature, the signal processing device 170 or the driving controller 285 can perform the second degradation compensation mode, and can control a magnitude of a luminance variation of the second display Arb to be greater than a magnitude of a luminance variation of the first display area Ara in the second degradation compensation mode. Accordingly, it is possible to reduce degradation in an adaptive manner based on the temperature of each area of the panel.

Meanwhile, when a difference between a first detection temperature and a second detection temperature is equal to or greater than a reference value and the first detection temperature is greater than the second detection temperature, the signal processing device 170 or the driving controller 285 can perform the second degradation compensation mode, and can control a magnitude of a luminance variation of the first display area Ara to be greater than a magnitude of a luminance variation of the second display Arb in the second degradation compensation mode. Accordingly, it is possible to reduce degradation in an adaptive manner based on the temperature of each area of the panel.

Meanwhile, upon performing the first degradation compensation mode, when a cumulative degradation amount of the first display area Ara is greater than a cumulative degradation amount of the second display area Arb, the signal processing device 170 or the driving controller 285 can control a magnitude of a luminance variation of the first display area Ara to be greater than a magnitude of a luminance variation of the second display area Arb. Upon performing the first degradation compensation mode, when the cumulative degradation amount of the second display area Arb is greater than the cumulative degradation amount of the first display area Ara, the signal processing device 170 or the driving controller 285 can control a magnitude of a luminance variation of the second display area Arb to be greater than a magnitude of a luminance variation of the first display area Ara. Accordingly, it is possible to reduce degradation in an adaptive manner based on the temperature of each area of the panel.

Meanwhile, upon performing the first degradation compensation mode or the second degradation compensation mode, the signal processing device 170 or the driving controller 285 can perform luminance gradation processing on a third display area including a boundary BL between the first display area Ara and the second display area Arb. Accordingly, it is possible to improve visibility of a boundary area BL between the first display area Ara and the second display area Arb.

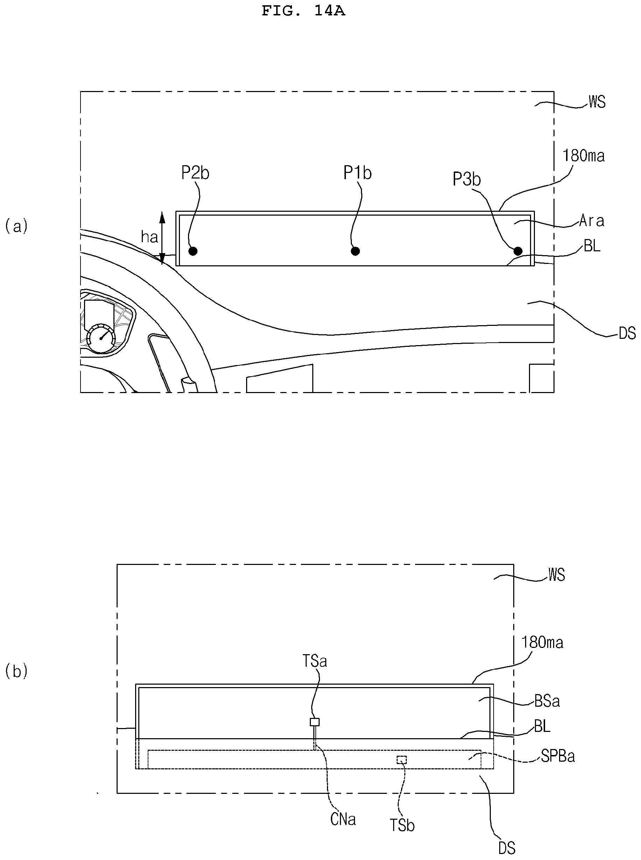

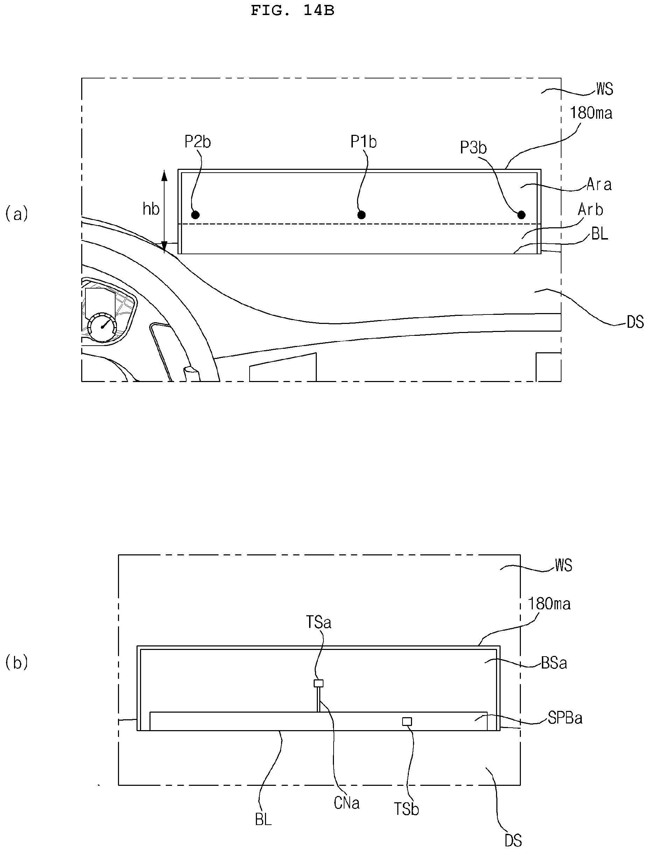

FIGS. 14A and 14B are diagrams referred to in the description of FIG. 12 or FIG. 13.

FIG. 14A illustrates a front surface and a rear surface of a display in a pop-down mode, according to an embodiment of the present disclosure.

Referring to FIG. 14A, by the operation of the motor driver 183, the display 180ma according to an embodiment of the present disclosure can operate in a pop-down mode in which only a first area Ara protrudes on a dashboard DS, as shown in (a) of FIG. 14A.

The display 180ma can have a height ha in the pop-down mode.

In this case, a boundary BL between the first display area Ara and a second display area Arb can be located at a height of the dashboard DS.

Meanwhile, as shown in (b) of FIG. 14A, the first temperature detector TSa and the second temperature detector TSa can be disposed on a rear surface of the display 180ma or on a rear surface of the OLED panel 210.

The first temperature detector TSa can be disposed on the rear surface of the display 180ma or in the first display area Ara of the rear surface of the OLED panel 210, and the second temperature detector TSb can be disposed on the rear surface of the display 180ma or in the second area Arb of the rear surface of the OLED panel 210.

Meanwhile, a circuit board SPBa for placement of the driving controller 285 or the like can be disposed at a lower portion of the rear surface of the display 180ma or the rear surface of the OLED panel 210, and the second temperature detector TSb can be disposed on the circuit board SPBa.

Meanwhile, the first temperature detector TSa can be spaced apart from the circuit board SPBa to be disposed above the circuit board SPBa, and a conductive line CNa can be disposed between the circuit board SPBa and the first temperature detector TSa to connect the first temperature detector TSa to the circuit board SPBa.

Meanwhile, the first temperature detector TSa can be disposed at a central portion of the first area Ara, and the second temperature detector TSb can be disposed at a right portion of the second area Arb rather than at a central portion thereof.

Meanwhile, in the pop-down mode, the circuit board SPBa and the second temperature detector TSb can be disposed below the dashboard DS and can not be exposed to the outside.

Meanwhile, in the pop-down mode, as the circuit board SPBa, the second temperature detector TSb, and the like are disposed below the dashboard DS and are thus not exposed, heat exchange is not easily achieved compared to the first temperature detector TSa that is disposed above the dashboard DS, which can cause the temperature of the circuit board SPBa and the second temperature detector TSb to be higher than the temperature of the first temperature detector TSa.

FIG. 14B illustrates a front surface and a rear surface of a display in a pop-up mode, according to an embodiment of the present disclosure.

Referring to the FIG. 14B, by the operation of the motor driver 183, the display 180ma according to an embodiment of the present disclosure can operate in a pop-up mode in which both a first display area Ara and a second display area Arb protrude on a dashboard DS, as shown in (a) of FIG. 14B.

The display 180ma can have a height hb in the pop-up mode, which is higher than the height ha of FIG. 14A.

In this case, a boundary BL between the first display area Ara and the second display area Arb can be located above the dashboard DS, thereby being exposed to the outside.

Meanwhile, as shown in (b) of FIG. 14B, the first temperature detector TSa and the second temperature detector TSb can be disposed on the rear surface of the display 180ma or the rear surface of the OLED panel 210.

Meanwhile, in the pop-up mode, the circuit board SPBa and the second temperature detector TSb can be at least partially exposed above the dashboard DS.

In the pop-up mode, as at least portions of the circuit board SPBa and the second temperature detector TSb are exposed, heat exchange can be more easily achieved as compared with the pop-down mode, and thus temperatures thereof can be lower.

Meanwhile, the signal processing device 170 can change a first luminance level of the input image corresponding to a first pixel P1b of the display 180ma in FIG. 14A or FIG. 14B to a second luminance level, and can change a third luminance level of the input image corresponding to a second pixel P2b of the display 180ma, which is closer to the driver seat than the first pixel P1b, to a fourth luminance level, and can control a difference between the fourth luminance level and the third luminance level to be greater than a difference between the second luminance level and the first luminance level. Accordingly, it is possible to compensate for luminance and color distortion according to the angle between the driver seat and the display.

Meanwhile, the signal processing device 170 can control a luminance variation of a luminance level of the input image corresponding to the first pixel P1b of the display 180ma in FIG. 14A or FIG. 14B to be greater than a luminance variation of a luminance level of the input image corresponding to the second pixel P2b of the display 180ma, which is closer to the driver seat than the first pixel P1b. Accordingly, it is possible to compensate for luminance and color distortion according to the angle or distance between the driver seat and the display.

Meanwhile, the signal processing device 170 can control a luminance variation of a luminance level of the input image corresponding to a third pixel P3b of the display 180ma in FIG. 14A or FIG. 14B, which is farther from the driver seat MST than the first pixel P1b, to be greater than a luminance variation of a luminance level of the input image corresponding to a first pixel P1b of the display 180ma. Accordingly, it is possible to compensate for luminance and color distortion according to the angle or distance between the driver seat and the display.

Meanwhile, the signal processing device 170 can control a color variation of the input image corresponding to the first pixel P1b of the display 180ma in FIG. 14A or FIG. 14B to be greater than a color variation of the input image corresponding to the second pixel P2b of the display 180ma, which is closer to the driver seat MST than the first pixel P1b. Accordingly, it is possible to compensate for luminance and color distortion according to the angle or distance between the driver seat and the display.

Meanwhile, the signal processing device 170 can control a color variation of the input image corresponding to the third pixel P3b of the display 180ma in FIG. 14A or FIG. 14B, which is farther from the driver seat MST than the first pixel P1b, to be greater than a color variation of the input image corresponding to the first pixel P1b of the display 180ma. Accordingly, it is possible to compensate for luminance and color distortion according to the angle or distance between the driver seat and the display.

Meanwhile, in FIG. 14A or 14B, the signal processing device 170 can perform luminance compensation and color compensation for each pixel based on a height of the display 180ma, an angle between a pixel of the display 180ma and the driver seat MST, and an average gray level of an input image, and can output an image signal on which the luminance compensation and the color compensation are performed. Accordingly, it is possible to compensate for luminance and color distortion according to the angle or distance between the driver seat and the display corresponding to the height-adjustable display 180ma.

Meanwhile, the signal processing device 170 can control a luminance variation of a luminance level of the input image corresponding to the first pixel P1b of the display 180ma when the height of the display 180ma is the first height hb, as shown in FIG. 14B, to be greater than a luminance variation of a luminance level of the input image corresponding to the first pixel P1b of the display 180ma when the height of the display 180ma is the second height ha lower than the first height hb, as shown in FIG. 14A. Accordingly, it is possible to compensate for luminance and color distortion according to the angle or distance between the driver seat and the display.

Meanwhile, the signal processing device 170 can change a target pixel in response to a change in the height of the display 180, and can perform luminance compensation and color compensation for each pixel based on the changed target pixel. Accordingly, it is possible to compensate for luminance and color distortion based more on a change in the height of the display 180.

Meanwhile, the signal processing device 170 can change (or adjust) a luminance variation or a color variation of the first pixel P1 of the display 180 in response to a change in the height of the display 180. Accordingly, it is possible to compensate for luminance and color distortion based more on a change in the height of the display 180.

Meanwhile, the signal processing device 170 can control a variation of a luminance level of the input image corresponding to the first pixel P1 of the display 180 when the height of the display 180 is the second height ha lower than the first height hb to be greater than a variation of a luminance level of the input image corresponding to the first pixel P1 of the display 180 when the height of the display 180 is the first height hb. Accordingly, it is possible to compensate for luminance and color distortion based more on a change in the height of the display 180.

Meanwhile, the signal processing device 170 can control a color variation of the input image corresponding to the first pixel P1 of the display 180 when the height of the display 180 is the second height ha lower than the first height hb to be greater than a color variation of the input image corresponding to the first pixel P1 of the display 180 when the height of the display 180 is the first height hb. Accordingly, it is possible to compensate for luminance and color distortion based more on a change in the height of the display 180.

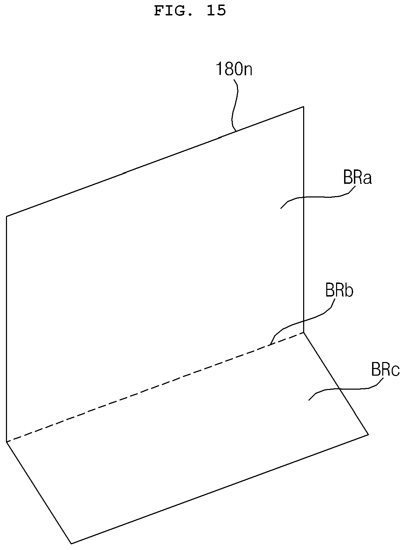

FIG. 15 illustrates another example of a display apparatus for a vehicle according to an embodiment of the present disclosure.

Referring to FIG. 15, the vehicle display apparatus 100 according to an embodiment of the present disclosure can include a bendable display 180n.

According to an embodiment of the present disclosure, the display 180n can include a first area BRa on an upper side and a second area BRc on a lower side with respect to a first boundary BRb.

That is, the display 180n can have a shape in which the second area BRc is bent with respect to the first boundary BRb.

Meanwhile, when a size or a shape of the display 180n is varied, the signal processing device 170 can change a target pixel, and can perform luminance compensation and color compensation for each pixel based on the changed target pixel. Accordingly, it is possible to compensate for luminance and color distortion according to the angle or distance between the driver seat and the display.

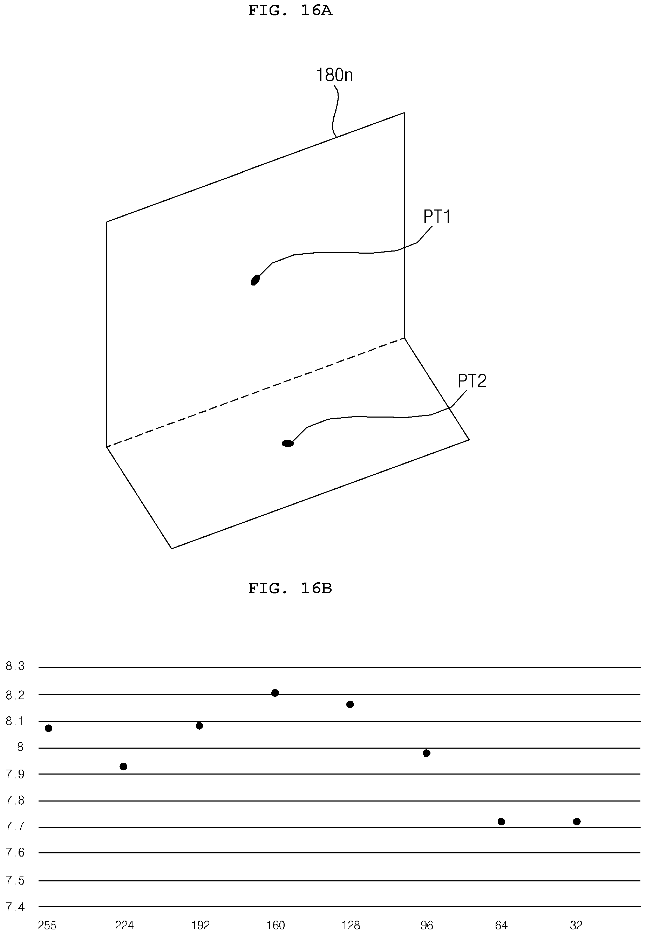

FIG. 16A to FIG. 16D are diagrams referred to in the description of FIG. 15.

FIG. 16A illustrates a bendable display 180n as described with reference to FIG. 15.

Referring to FIG. 16A, when the display 180n is flat, the signal processing device 170 can perform luminance compensation and color compensation for each pixel based on a first pixel PT1 as a target pixel.

By contrast, when the display 180n has a shape in which a lower portion thereof is bent as illustrated in FIG. 16A, the signal processing device 170 can set the first pixel PT1 or a second pixel PT2 as a target pixel, and can perform luminance compensation and color compensation for each pixel based on the first pixel PT1 or the second pixel PT2. Accordingly, it is possible to compensate for luminance and color distortion according to the angle or distance between the driver seat and the display.

Meanwhile, the signal processing device 170 can calculate respective difference values of a luminance L, a first color a, and a second color b of the lower area bent relative to the upper area of the display 180n.

FIG. 16B illustrates color differences ΔE for a plurality of gray levels.

Referring to 16B, color differences ΔE at gray levels of 32, 64, 96, 128, 160, 192, 224, and 255 can be 7.723, 7.723, 7.979, 8.166, 8.028, 8.083, 7.929, and 8.073, respectively.

Meanwhile, the signal processing device 170 can perform, for each pixel, luminance compensation and color compensation based on the color difference ΔE at each gray level. Accordingly, it is possible to compensate for luminance and color distortion according to the angle or distance between the driver seat and the display.

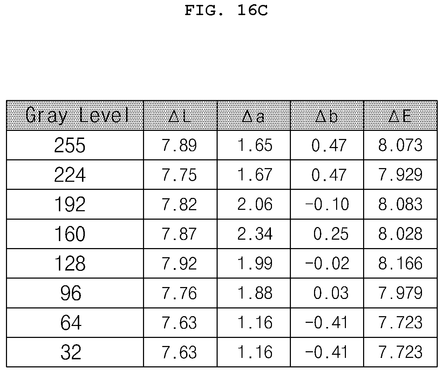

FIG. 16C illustrates luminance deviations (ΔL), first color deviations (Δa), second color deviations (Δb), and color differences (ΔE) for a plurality of gray levels.

Referring to FIG. 16C, luminance deviations (ΔL), first color deviations (Δa), second color deviations (Δb), and color differences (ΔE) at gray levels of 32, 64, 96, 128, 160, 192, 224, and 255 can be illustrated as shown in the figure.

Meanwhile, the signal processing device 170 can perform, for each pixel, luminance compensation and color compensation based on the luminance deviation (ΔL), the first color deviation (Δa), the second color deviation (Δb), and the color difference (ΔE) at each gray level. Accordingly, it is possible to compensate for luminance and color distortion according to the angle or distance between the driver seat and the display.

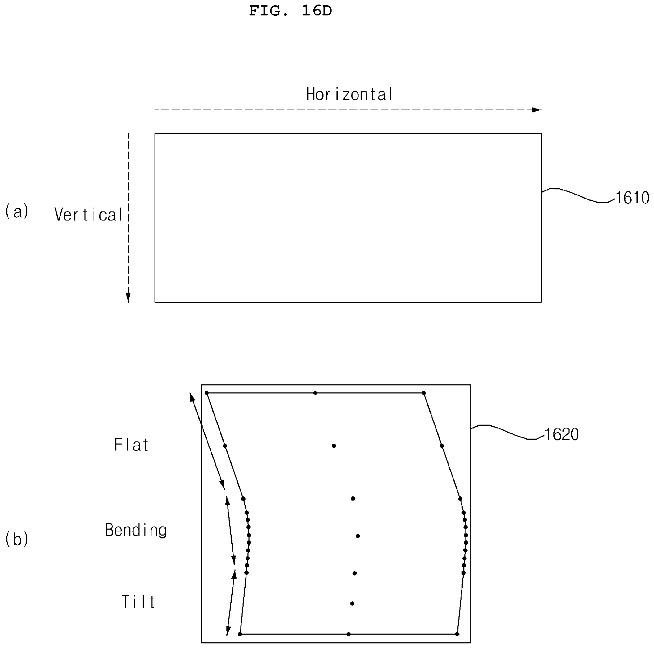

FIG. 16D is a diagram for explaining signal processing operations when the display of FIG. 15 is flat and when the display of FIG. 15 is bent.

Referring to FIG. 16D, when the display 180n is flat, the signal processing device 170 can perform, for each pixel, luminance compensation and color compensation on all areas of the display 180n in an input image 1610 based on a target pixel luminance and a target pixel color, based on the number of horizontal pixels and vertical pixels.

When the display 180n is bent as illustrated in FIG. 15, the signal processing device 170 can perform luminance compensation and color compensation for each pixel in an input image 1602 based on a flat area, a bending area, and a tilt area.

Specifically, when the display 180n is bent as illustrated in FIG. 15, the signal processing device 170 can calculate compensation curves corresponding to a new viewing angle range based on the number of pixels for each of the flat area, the bending area, and the tilt area.

Then, the signal processing device 170 can perform luminance compensation and color compensation for each pixel based on the compensation curves corresponding to the respective areas. Accordingly, it is possible to compensate for luminance and color distortion corresponding to the shape of the display 180n.

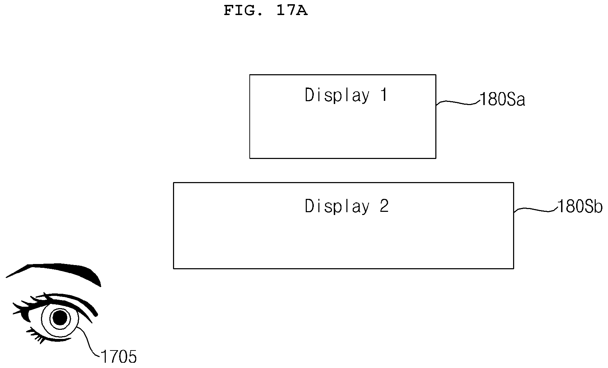

FIGS. 17A to FIG. 20B illustrate various examples of a display apparatus for a vehicle according to embodiments of the present disclosure.

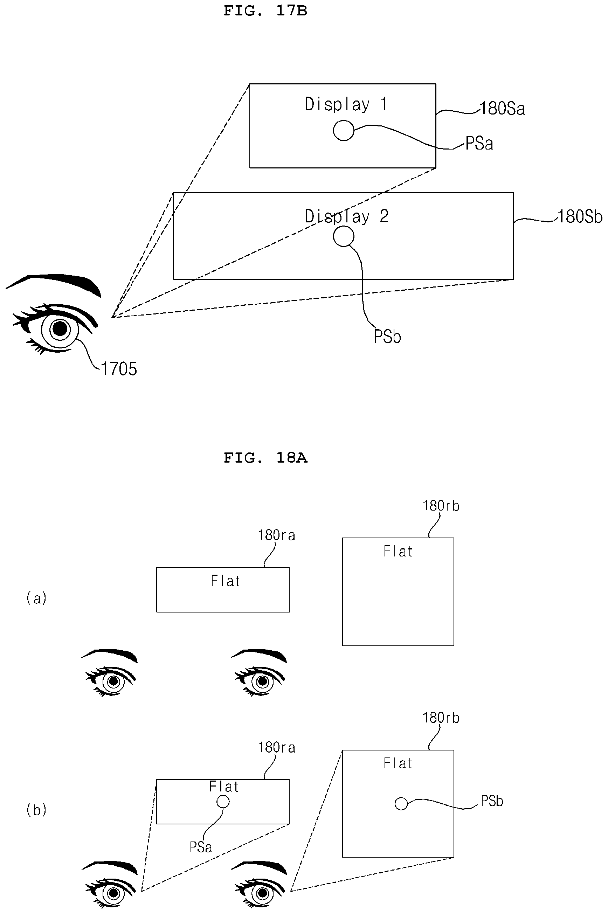

FIGS. 17A and 17B are diagrams for explaining signal processing operations according to various sizes of a display.

FIG. 17A illustrates a display of a first size and a display of a second size.

Referring to FIG. 17A, in the case of a display 180ra having the first size, the signal processing device 170 can perform luminance compensation and color compensation for each pixel in an input image based on a first target pixel PSa in the display 180ra having the first size.

Meanwhile, in the case of a display 180rb having the second size, the signal processing device 170 can perform luminance compensation and color compensation for each pixel in an input image based on a second target pixel PSb in the display 180rb having the second size.

FIG. 17B illustrates a change in position of a target pixel in a display of a first size and a display of a second size.

Referring to FIG. 17B, in the case of a display 180Sa having the first size, the signal processing device 170 can perform luminance compensation and color compensation for each pixel in an input image based on a first target pixel PSa in the display 180Sa having the first size.

Meanwhile, in the case of a display 180Sb having the second size, the signal processing device 170 can perform luminance compensation and color compensation for each pixel in an input image based on a second target pixel PSb in the display 180Sb having the second size.

That is, when the display 180Sb has the second size, upon changing a target pixel, the signal processing device 170 can change or modify a position value of a viewing angle of a driver 1705, and can perform luminance compensation and color compensation for each pixel in the input image based on the changed or modified position value.

FIGS. 18A to 18D are diagrams for explaining signal processing operations according to various displays.

FIG. 18A illustrates a flat display of a first size and a flat display of a second size.

Referring to FIG. 18A, in the case of a display 180ra having the first size, the signal processing device 170 can perform luminance compensation and color compensation for each pixel in an input image based on a first target pixel PSa in the display 180ra having the first size.

Meanwhile, in the case of a display 180rb having the second size, the signal processing device 170 can perform luminance compensation and color compensation for each pixel in an input image based on a second target pixel PSb in the display 180rb having the second size.

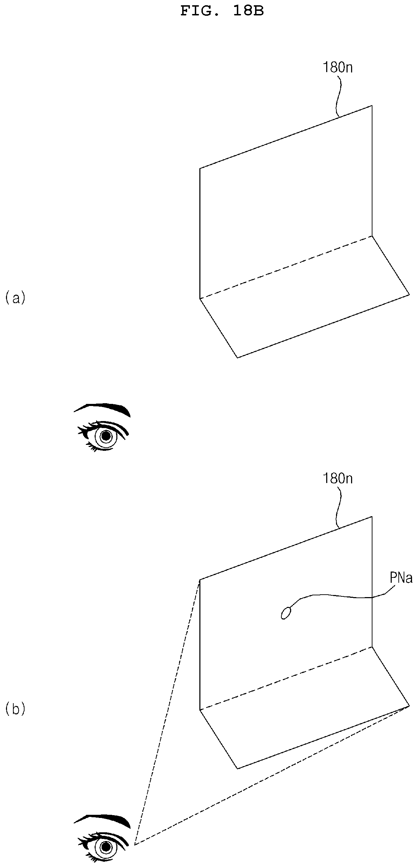

FIG. 18B illustrates a bendable display.

Referring to FIG. 18B, in the case of a bendable display 180n, the signal processing device 170 can perform luminance compensation and color compensation for each pixel in an input image based on a target pixel PNa in a bendable area or a tilt area of the bendable display 180n.

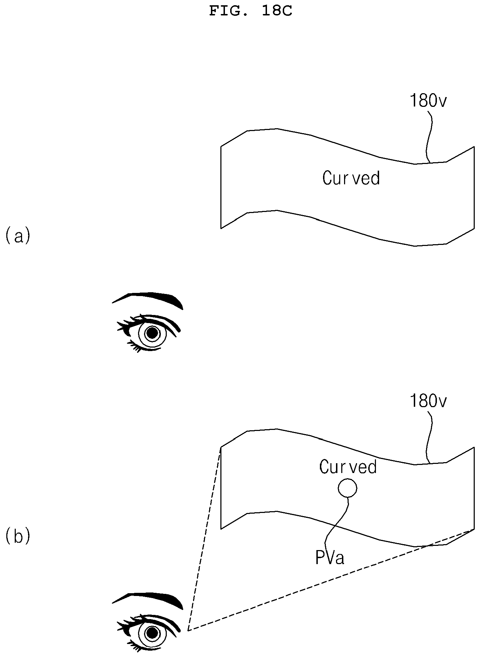

FIG. 18C illustrates a curved display.

Referring to FIG. 18C, in the case of a curved display 180v, the signal processing device 170 can perform luminance compensation and color compensation for each pixel in an input image based on a target pixel PVa in the curved display 180v.

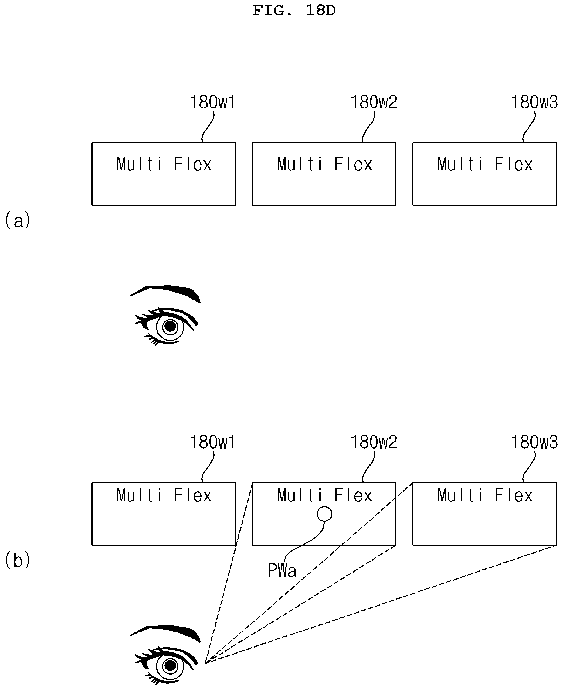

FIG. 18D illustrates a multiplex display.

Referring to FIG. 18D, in the case of a multiplex display 180w1, 180w2, 180w3, the signal processing device 170 can perform luminance compensation and color compensation for each pixel in an input image based on a target pixel PWa in a portion of the multiplex display 180w1, 180w2, 180w3.

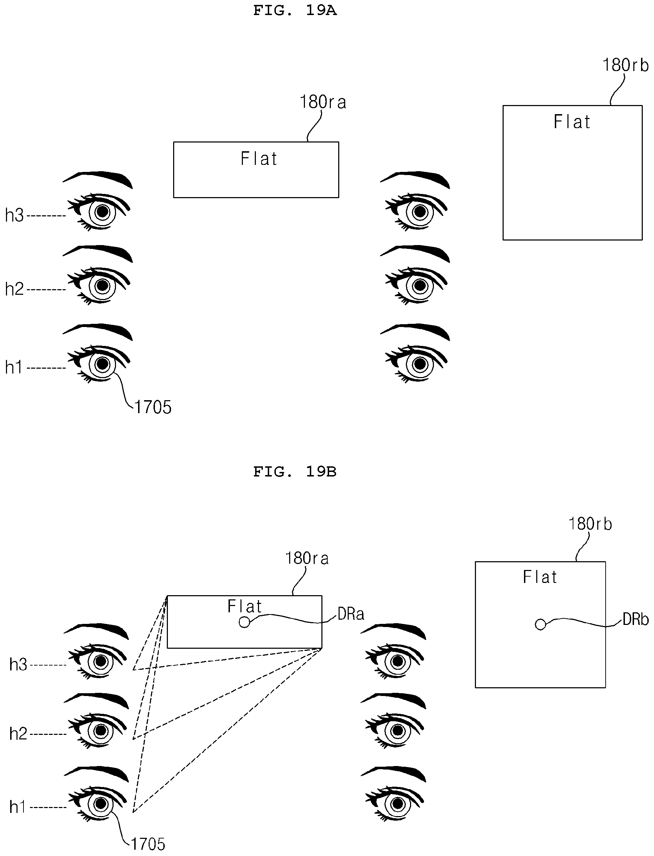

FIGS. 19A and 19B are diagrams for explaining signal processing operations according to a change in an eye height of a driver.

FIG. 19A illustrates a flat display of a first size and a flat display of a second size.

Referring to FIG. 19A, a height of a driver seat MST or an eye height of a driver seated in the driver seat MST can be varied to a first height h1, a second height h2, or a third height h3.

Meanwhile, when the height of the driver seat MST or the eye height of the driver seated in the driver seat MST is varied, the signal processing device 170 can change a target pixel corresponding to the eye height, and can perform luminance compensation and color compensation for each pixel based on the changed target pixel. Accordingly, it is possible to compensate for luminance and color distortion according to the variable angle or distance between the driver seat and the display.

FIG. 19B illustrates a target pixel corresponding to a third height.

Referring to FIG. 19B, when a height of a driver seat MST or an eye height of a driver seated in the driver seat MST is the third height h3, the signal processing device 170 can perform luminance compensation and color compensation for each pixel in an input image based on a target pixel DRa in the display 180ra of the first size corresponding to the third height h3. Accordingly, it is possible to compensate for luminance and color distortion according to the variable angle or distance between the driver seat and the display.

Alternatively, when the height of the driver seat MST or the eye height of the driver seated in the driver seat MST is the third height h3, the signal processing device 170 can perform luminance compensation and color compensation for each pixel in an input image based on a target pixel DRb in the display 180rb of the second size corresponding to the third height h3. Accordingly, it is possible to compensate for luminance and color distortion according to the variable angle or distance between the driver seat and the display.

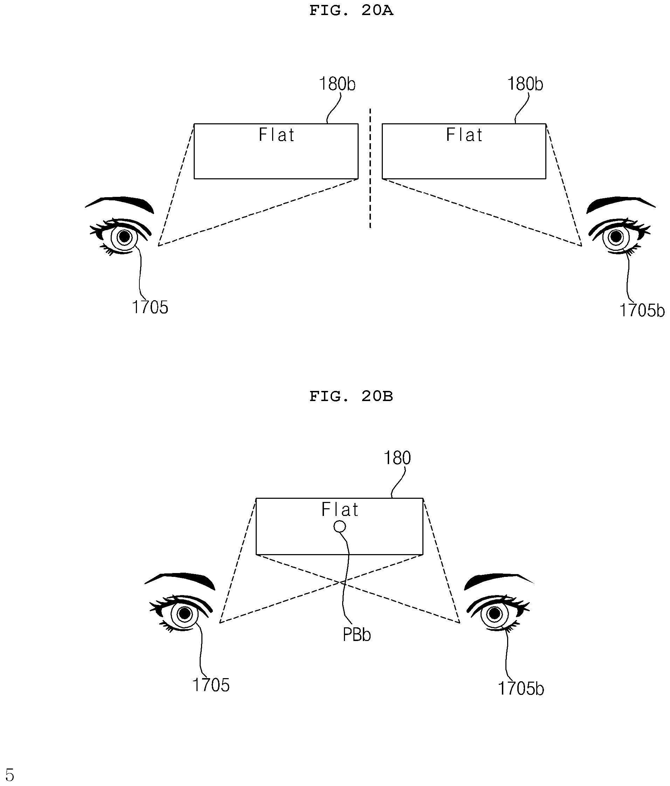

FIG. 20A illustrates a case in which a driver and a passenger are seated in a driver seat and a passenger seat, respectively.

Referring to FIG. 20A, a driver 1705 seated in a driver seat MST can maintain a line of sight toward the display 180b, and a passenger 705b seated in a passenger seat SST can maintain a line of sight toward the display 180b.

FIG. 20B is a diagram for explaining the signal processing operation of FIG. 20A.

Referring to FIG. 20B, when a driver 1705 is seated in a driver seat MST, and a passenger 1705b is seated in a passenger seat SST, the signal processing device 170 can perform luminance compensation and color compensation for each pixel based on a target pixel PBb in the display 180. Accordingly, it is possible to compensate for luminance and color distortion according to the angle or distance between the driver seat and the display.

In particular, when the driver 1705 is seated in the driver seat MST, and the passenger 1705b is seated in the passenger seat SST, the signal processing device 170 can change the target pixel from a first pixel to a second pixel, unlike a case in which only the driver 1705 is seated in the driver seat MST.

That is, when the driver 1705 is seated in the driver seat MST, and the passenger 1705b is seated in the passenger seat SST, the signal processing device 170 can change the target pixel from the first pixel to the second pixel, and can perform luminance compensation and color compensation for each pixel based on the changed second pixel. Accordingly, it is possible to compensate for luminance and color distortion according to the angle or distance between the driver seat and the display.

Meanwhile, the signal processing device 170 can perform, for each pixel, luminance compensation and color compensation based on an angle between a pixel of the display 180 and the driver seat MST, an angle between a pixel of the display 180 and the passenger seat SST, and an average gray level of an input image, and can output an image signal on which the luminance compensation and the color compensation are performed. Accordingly, it is possible to compensate for luminance and color distortion according to the angle or distance between the driver seat and the display.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for a vehicle, the display apparatus comprising:
a display including an organic light emitting diode panel; and
a signal processing device configured to perform signal processing on an input image and output an image signal to the display,
wherein the signal processing device is configured to:
perform luminance compensation and color compensation for each pixel based on an angle between a pixel of the display and a driver seat, and an average gray level of the input image; and
output an image signal on which the luminance compensation and the color compensation are performed.

2. The display apparatus of claim 1, wherein the signal processing device is configured to:
perform first luminance compensation and color compensation for each pixel based on the angle between a pixel of the display and the driver seat; and
perform second luminance compensation for each pixel based on the average gray level of the input image.

3. The display apparatus of claim 1, wherein the signal processing device is configured to:
calculate an average gray level of the input image based on gray levels of the input image;
select, based on the average gray level, one compensation curve from among a plurality of compensation curves; and
perform the luminance compensation and the color compensation for each pixel based on the angle between a pixel of the display and the driver seat, and the selected compensation curve.

4. The display apparatus of claim 1, wherein the signal processing device is configured to:
change a first luminance level of the input image corresponding to a first pixel of the display to a second luminance level;
change a third luminance level of the input image corresponding to a second pixel of the display to a fourth luminance level, the second pixel being closer to the driver seat than the first pixel; and
control a difference between the fourth luminance level and the third luminance level to be greater than a difference between the second luminance level and the first luminance level.

5. The display apparatus of claim 1, wherein the signal processing device is configured to control a luminance variation of a luminance level of the input image corresponding to a first pixel of the display to be less than a luminance variation of a luminance level of the input image corresponding to a second pixel of the display, the second pixel being closer to the driver seat than the first pixel.

6. The display apparatus of claim 5, wherein the signal processing device is configured to control a luminance variation of a luminance level of the input image corresponding to a third pixel of the display to be greater than a luminance variation of a luminance level of the input image corresponding to the first pixel of the display, the third pixel being farther from the driver seat than the first pixel.

7. The display apparatus of claim 1, wherein the signal processing device is configured to control a color variation of the input image corresponding to a first pixel of the display to be less than a color variation of the input image corresponding to a second pixel of the display, the second pixel being closer to the driver seat than the first pixel.

8. The display apparatus of claim 1, wherein the signal processing device is configured to control a variation of a blue luminance level of the input image corresponding to a predetermined pixel of the display to be less than a variation of a green luminance level or a variation of a red luminance level.

9. The display apparatus of claim 1, wherein the signal processing device is configured to control a variation of luminance compensation or a variation of color compensation for each pixel to remain constant even when the average gray level of the input image changes.

10. The display apparatus of claim 1, wherein the signal processing device is configured to perform luminance compensation and color compensation for each pixel, and
wherein, in response to the input image being a white image, the signal processing device is configured to control a luminance level of a first pixel of the display to be greater than a luminance level of a second pixel of the display, the second pixel being closer to the driver seat than the first pixel.

11. The display apparatus of claim 1, wherein the signal processing device is configured to perform luminance compensation and color compensation for each pixel based on a target pixel among a plurality of pixels of the display.

12. The display apparatus of claim 11, wherein the signal processing device is configured to not perform the luminance compensation and the color compensation on the target pixel.

13. The display apparatus of claim 1, wherein, upon a change in a size or a shape of the display, the signal processing device is configured to change a target pixel from a first pixel to a second pixel, and to perform luminance compensation and color compensation for each pixel based on the changed second pixel.

14. The display apparatus of claim 1, wherein the signal processing device is configured to:
change a target pixel from a first pixel to a second pixel in response to a change in a height of a driver seat and an eye height of a driver seated in the driver seat; and
perform luminance compensation and color compensation for each pixel based on the changed second pixel.

15. The display apparatus of claim 1, wherein the signal processing device is configured to:
change a target pixel from a first pixel to a second pixel in response to a driver being seated in a driver seat and a passenger is seated in a passenger seat; and
perform luminance compensation and color compensation for each pixel based on the changed second pixel.

16. The display apparatus of claim 1, wherein the signal processing device is configured to:
perform luminance compensation and color compensation for each pixel based on an angle between a pixel of the display and a driver seat, an angle between a pixel of the display and a passenger seat, and an average gray level of the input image; and
output an image signal on which the luminance compensation and the color compensation are performed.

17. The display apparatus of claim 1, further comprising a motor driver configured to cause a height adjustment of the display,
wherein the signal processing device is configured to:
perform luminance compensation and color compensation for each pixel based on a height of the display, an angle between a pixel of the display and a driver seat, and an average gray level of the input image; and
output an image signal on which the luminance compensation and the color compensation are performed.

18. The display apparatus of claim 17, wherein the signal processing device is configured to:
change a target pixel in response to a change in the height of the display; and
perform luminance compensation and color compensation for each pixel based on the changed target pixel.

19. The display apparatus of claim 17, wherein the signal processing device is configured to change a luminance variation or a color variation of a first pixel of the display in response to a change in the height of the display.

20. The display apparatus of claim 17, wherein the signal processing device is configured to control a variation of a luminance level of the input image corresponding to a first pixel of the display in response to the height of the display being a first height to be less than a variation of a luminance level of the input image corresponding to the first pixel of the display in response to the height of the display being a second height lower than the first height.
